# EUROPÄISCHE PATENTANMELDUNG

(11) **EP 4 002 306 A1**
(43) Veröffentlichungstag der Anmeldung: **25.05.2022**
(21) Anmeldenummer: 21204268.3
(22) Anmeldetag: 22.10.2021
(51) Int. Cl.: G07B 15/02, G06Q 50/30

(54) **OPEN-LOOP TRANSPORTSYSTEM MIT EINEM HINTERGRUNDSYSTEM**

(30) Priorität: 20.11.2020 DE 102020130696
(71) Anmelder: Scheidt & Bachmann GmbH, 41238 Mönchengladbach (DE)
(72) Erfinder: TROLL, Manfred, 41065 Mönchengladbach (DE)
(74) Vertreter: Cohausz & Florack

(57) **Zusammenfassung**

Die Anmeldung betrifft ein Hintergrundsystem (102, 303) eines Open-Loop Transportsystems (100), umfassend mindestens ein Abrechnungsmodul (110), eingerichtet zum Abrechnen einer durchgeführten Fahrt, zumindest basierend auf einem erhaltenen Startdatensatz, einem erhaltenen Enddatensatz und einem fest vorgegebenen Tarifdatum, wobei der Startdatensatz und der Enddatensatz jeweils die gleiche Mediumkennungsreferenz, bestimmt aus der durch mindestens eine Validatorvorrichtung (126, 302) des Transportsystems (100) erfassten elektronischen Mediumkennung eines Ticketmediums (124), und mindestens ein Transportinformationsdatum enthalten, mindestens ein dynamisches Tarifbestimmungsmodul (112), eingerichtet zum Bestimmen eines augenblicklichen Tarifdatums, basierend einer angefragten Fahrtangabe und mindestens auf einem Tarifkriterium, wobei sich das augenblickliche Tarifdatum von dem fest vorgegebenen Tarifdatum unterscheidet, mindestens ein Ausgabemodul (106), eingerichtet zum Ausgeben eines für die angefragte Fahrtangabe bestimmten augenblicklichen Tarifdatums, und mindestens ein Speichermodul (114), eingerichtet zum Speichern eines Fahrtdatensatzes, enthaltend die angefragte Fahrtangabe, das ausgegebene augenblickliche Tarifdatum und eine Mediumkennungsreferenz, bei Erhalt eines Bestätigungsdatensatzes als Antwort auf das für die angefragte Fahrtangabe ausgegebene augenblickliche Tarifdatum, wobei das Abrechnungsmodul (110) eingerichtet ist zum Abrechnen der angefragten Fahrtangabe, basierend auf dem gespeicherten Fahrtdatensatz zumindest bei einer Detektion einer Inanspruchnahme der für die Mediumkennungsreferenz gespeicherten Fahrtangabe.

## Beschreibung

Die Anmeldung betrifft ein Hintergrundsystem eines Open-Loop Transportsystems, umfassend mindestens ein Abrechnungsmodul, eingerichtet zum Abrechnen einer durchgeführten Fahrt, zumindest basierend auf einem erhaltenen Startdatensatz, einem erhaltenen Enddatensatz und einem fest vorgegebenen Tarifdatum, wobei der Startdatensatz und der Enddatensatz jeweils die gleiche Mediumkennungsreferenz, bestimmt (insbesondere berechnet) aus der durch mindestens eine Validatorvorrichtung des Transportsystems erfassten elektronischen Mediumkennung, und mindestens ein Transportinformationsdatum enthalten. Darüber hinaus betrifft die Anmeldung ein Open-Loop Transportsystem und ein Verfahren zum Betreiben eines Open-Loop Transportsystems.

Transportsysteme zum Durchführen von Fahrten sind aus dem Stand der Technik bekannt. Unter einer Fahrt in einem Transportsystem ist insbesondere die Nutzung einer Transportvorrichtung, vorzugsweise eines Transportfahrzeugs (z.B. Bus, Bahn, Flugzeug, Wasserfahrzeug etc.), durch einen Nutzer zu verstehen. Anders ausgedrückt, kann ein Transportsystem mindestens ein Transportfahrzeug zum Transportieren von Nutzern bzw. Personen umfassen.

Um bei konventionellen (Personen-) Transportsystemen eine Fahrtberechtigung zu erwerben, kann ein Nutzer, typischerweise vor Fahrt, die Fahrtberechtigung beispielsweise durch Kauf eines Tickets erhalten. Beispielhafte und nicht abschließende Fahrtberechtigung bei Transportsystemen sind Einzel- oder Mehrfahrtentickets, sowie Zeitfahrkarten, wie beispielsweise Wochen- oder Monatstickets.

In der heutigen Zeit finden auch Transportsysteme bzw. Ticketsysteme Verwendung, bei denen Ticketmedien mit elektronischen Nutzerberechtigungen verwendet werden, wie elektronische Tickets. Üblich sind Transportsysteme, bei denen proprietäre Ticketmedien des Anbieters des Transportsystems zum Einsatz kommen. Kennzeichnend ist hierbei, dass diese elektronischen Ticketmedien Gültigkeits- und Nutzungsinformationen als Daten auf dem Ticketmedium gespeichert vorhalten (sogenanntes Card-Based Ticketing). Typischerweise ist das Card-Based-Ticketing ein "pre-paid" Verfahren, bei dem die Fahrtberechtigung vorab gekauft wird und als elektronische Daten auf dem Ticketmedium kodiert wird. Das Card-Based-Ticketing bildet gewissermaßen den gedruckten Papierfahrschein mitsamt Entwerteraufdruck elektronisch ab. Diese Ticketmedien sind vor allem insofern proprietär, als sie einen für das Transportsystem und/oder für den Anbieter des Ticketsystems eigenen Dateninhalt und/oder eine eigene Datenstruktur und/oder eine eigene Datenverschlüsselung aufweisen.

Um die Nutzerfreundlichkeit noch weiter zu erhöhen, werden jedoch vermehrt so genannte Open-Loop Transportsysteme bzw. Transportsysteme mit einem Open-Loop Ticketsystem implementiert. Bei einem Open-Loop Transportsystem können Nutzer insbesondere unter Nutzung eines nicht-proprietären Ticketmediums Fahrten durchführen.

Bei derartigen Transportsystemen ist eine Fahrtberechtigung eine durch eine Validatorvorrichtung auslesbare elektronische Mediumkennung eines (tragbaren) Ticketmediums, wie eine elektronische Kartenkennung eines Ticketmediums in Form einer Kreditkarte und/oder Debitkarte oder eine elektronische Kennung einer auf einem mobilen Endgerät eines Nutzers installierte Zahlungsdienstleistungsanwendung.

Grundsätzlich kann eine berechtigte Fahrt durch einen Nutzer wie folgt erfolgen: Bei einem Betreten eines zahlungspflichtigen Raums (z.B. Transportfahrzeug, ein Bahnsteig eines Startbahnhofs etc.) durch den Nutzer kann durch eine Validatorvorrichtung des Open-Loop Transportsystems die auf dem Ticketmedium gespeicherte elektronische Mediumkennung erfasst werden. Die Validatorvorrichtung kann an dem mindestens einen Zugang (z.B. Ein- und/oder Ausgang) zu dem zahlungspflichtigen Raum installiert sein. Insbesondere kann eine Validatorvorrichtung über mindestens eine Ticketmediumschnittstelle verfügen, wie ein Ticketmediumlesegerät, beispielweise in Form eines Kartenlesers. Ein an (mit einer ausreichenden Reichweite) oder in das Ticketmediumlesegerät gehaltenes Ticketmedium kann ausgelesen werden, so dass die in einem Datenspeicher des Ticketmediums gespeicherte elektronische Mediumkennung erfasst werden kann. Bei Varianten des Transportsystems kann vorgesehen sein, dass eine Validatorvorrichtung mit wenigstens einem Sperrelement ausgeführt ist (z.B. als Zugangssperre oder so genanntes "Gate") oder ohne Sperrelement (z.B. als Entwerter).

Bei einem Verlassen des zahlungspflichtigen Raums kann durch eine weitere oder die gleiche Validatorvorrichtung des Transportsystems die auf dem Ticketmedium gespeicherte elektronische Mediumkennung erneut erfasst werden, wie zuvor beschrieben wurde.

Für die Abrechnung der durchgeführten Fahrt kann die mindestens eine Validatorvorrichtung die Mediumkennungsreferenz der jeweils erfassten elektronischen Mediumkennung in Form eines Startdatensatzes bzw. Enddatensatzes an ein (zentrales) Hintergrundsystem (beispielsweise gebildet durch eine oder mehrere verteilt angeordnete Rechenvorrichtung/en) des Transportsystems übertragen. Vorzugsweise können ein Startdatensatz und ein Enddatensatz jeweils mindestens ein Transportinformationsdatum umfassen, wie eine systemweit eineindeutige Kennung (insbesondere eine Identifikationsnummer) der Validatorvorrichtung und/oder eine jeweilige Erfassungszeitangabe und/oder ein Erfassungsort.

Ein (z.B. auf einer Rechenvorrichtung des Hintergrundsystems implementiertes) Abrechnungsmodul des Hintergrundsystems kann, basierend auf der Mediumkennungsreferenz (die insbesondere Abrechnungsdaten, wie eine gehashte Kreditkartennummer oder dergleichen umfassen kann) und des mindestens einen Transportinformationsdatums (z.B. den Ortsangaben und/oder Zeitangaben) des Startdatensatzes und Enddatensatzes eine Abrechnung der durchgeführten Fahrt durchführen.

Beispielsweise kann das Abrechnungsmodul eingerichtet sein, basierend auf den erhaltenen Daten, eine zeit- und/oder entfernungsbasierte Abrechnung durchzuführen.

Hierbei basiert die Abrechnung bei dem aus dem Stand der Technik bekannten Hintergrundsystem eines Open Loop Systems stets auf mindestens einem fest vorgegebenen Tarifdatum, also einem unveränderlichen Tarifdatum.

Ein Open-Loop System unterscheidet sich also vom oben beschriebenen Card-Based-Ticketing vor allem darin, dass die Open-Loop Ticketmedien nicht-proprietär sind, (sie sind beispielsweise Kreditkarten), dass die Open-Loop Ticketmedien keine tariflichen Gültigkeitsinformationen und auch keine Fahrtberechtigungen tragen, sondern nur einen Identifikator (beispielsweise die EPAN, also die elektronisch kodierte Kreditkartennummer), dass die Abrechnung der Fahrt in einem Hintergrundsystem erfolgt, insbesondere mithilfe eines Nutzerkontos, das dem Identifikator zugeordnet ist, und dass die Bezahlung "post-paid" ist, d.h. die Zahlung für durchgeführte Fahrt erfolgt nach der Fahrt, weil erst dann die Fahrtdaten bekannt sind. Wegen der Abrechnung insbesondere mithilfe eines Nutzerkontos spricht man auch von Account-Based Ticketing.

Zwar erhöht ein derartiges Open-Loop Transportsystem den Nutzerkomfort, indem Nutzer keine Ticketmedien vor einer Fahrt erwerben müssen, sondern die Fahrt mit einem regelmäßig ohnehin vorhandenen Ticketmedium durchführen können.

Im Gegensatz zum konventionellen Card-Based-Ticketing hat das Open-Loop (oder Account-Based) Ticketing jedoch aus Sicht der Verkehrsbetriebe den Nachteil, dass damit keine Reservierungen vorgenommen werden können, da auf dem Open-Loop Ticketmedium keine Fahrtberechtigung gespeichert werden kann. Verkehrsbetriebe haben aber, insbesondere in hoch ausgelasteten Metropolregionen, den dringenden Bedarf, die Auslastung ihrer Transportfahrzeuge zu steuern und/oder die Transportkapazitäten an den Bedarf anzupassen. Außerdem bringt eine zu hohe Auslastung eines Transportfahrzeugs oder eines anderen zahlungspflichtigen Raums den Nachteil mit, dass Infektionskrankheiten, wie Covid-19, aufgrund der geringen Distanzen zwischen den Nutzern leicht übertragen werden können. Es besteht also insgesamt ein Bedarf daran, den Funktionsumfang eines Open-Loop-Ticketing Systems dahin gehend zu erweitern, dass Nutzer Reservierungen vornehmen können und dass sie dazu angeregt werden.

Daher liegt der Anmeldung die Aufgabe zugrunde, ein Hintergrundsystem eines Open-Loop Transportsystems bereitzustellen, bei dem die Nachteile des Standes der Technik zumindest reduziert werden und insbesondere das Risiko einer zu hohen Auslastung von zahlungspflichtigen Räumen reduziert wird.

Die Aufgabe wird gemäß einem ersten Aspekt der Anmeldung gelöst durch ein Hintergrundsystem eines Open-Loop Transportsystems gemäß Anspruch 1. Das Hintergrundsystem umfasst mindestens ein Abrechnungsmodul, eingerichtet zum Abrechnen einer durchgeführten Fahrt, zumindest basierend auf einem erhaltenen Startdatensatz, einem erhaltenen Enddatensatz und einem fest vorgegebenen Tarifdatum. Der Startdatensatz und der Enddatensatz enthalten jeweils die gleiche Mediumkennungsreferenz, bestimmt aus der durch mindestens eine Validatorvorrichtung des Transportsystems erfassten elektronischen Mediumkennung eines Ticketmediums, und mindestens ein Transportinformationsdatum. Das Hintergrundsystem umfasst ferner mindestens ein dynamisches Tarifbestimmungsmodul, eingerichtet zum Bestimmen eines augenblicklichen Tarifdatums, basierend einer angefragten Fahrtangabe und mindestens auf einem Tarifkriterium. Das augenblickliche Tarifdatum unterscheidet sich von dem fest vorgegebenen Tarifdatum. Das Hintergrundsystem umfasst mindestens ein Ausgabemodul, eingerichtet zum Ausgeben des für die angefragte Fahrtangabe bestimmten augenblicklichen Tarifdatums. Das Hintergrundsystem umfasst mindestens ein Speichermodul, eingerichtet zum Speichern eines Fahrtdatensatzes, enthaltend die angefragte Fahrtangabe, das ausgegebene augenblickliche Tarifdatum und eine elektronische Mediumkennungsreferenz, bei Erhalt eines Bestätigungsdatensatzes als Antwort auf das für die angefragte Fahrtangabe ausgegebene augenblickliche Tarifdatum. Das Abrechnungsmodul ist eingerichtet zum Abrechnen der angefragten Fahrtangabe, basierend auf dem gespeicherten Fahrtdatensatz zumindest bei einer Detektion einer Inanspruchnahme der für die elektronische Mediumkennungsreferenz gespeicherten Fahrtangabe.

Indem im Gegensatz zum Stand der Technik anmeldungsgemäß bei einem Open-Loop Transportsystem ein Hintergrundsystem bereitgestellt wird, bei dem ein dynamisches Tarifbestimmungsmodul vorgesehen ist, das abhängig von einer erhaltenen Nutzungsanfrage und mindestens einem bestimmten Tarifkriterium ein für die angefragte Fahrt augenblicklich gültiges Tarifdatum bestimmt, welches durch einen Nutzer für die Fahrt angenommen werden kann, werden die Nachteile des Standes der Technik und insbesondere das Risiko einer zu hohen Auslastung von zahlungspflichtigen Räumen zumindest reduziert. Insbesondere kann durch das anmeldungsgemäße Hintergrundsystem eine Auslastungssteuerung zur Verfügung gestellt werden, bei dem bei einem Open-Loop Transportsystem die Kapazitätsanpassung des Verkehrsbetriebs und der Komfort der Nutzer verbessert werden können, und das Risiko einer Übertragung einer Infektionskrankheit (z.B. Covid-19) kann reduziert werden, indem beispielsweise Distanzregeln zwischen Nutzern besser eingehalten werden können.

Das anmeldungsgemäße Hintergrundsystem dient der Steuerung und/oder Verwaltung eines Open-Loop Transportsystems, insbesondere der Auslastung der Transportfahrzeuge des Open-Loop Transportsystems. Ein Hintergrundsystem, auch Backendsystem genannt, kann eine oder mehrere (verteilt angeordnete) Rechenvorrichtung/en umfassen und insbesondere als Serveranordnung dienen. Auf dem Hintergrundsystem können von einem Prozessor ausführbare (Software-) Module installiert sein.

Ein anmeldungsgemäßes Open-Loop Transportsystem ist ein Open-Loop Personentransportsystem. Ein derartiges Transportsystem umfasst in der Regel eine Mehrzahl von Transportfahrzeugen, wie z.B. Bus, Bahn, Flugzeug, Wasserfahrzeug etc.

Ein Open-Loop Transportsystem (nachfolgend auch kurz nur als Transportsystem bezeichnet) meint vorliegend ein Transportsystem, bei dem (zumindest auch) nichtproprietäre Ticketmedien für eine ordnungsgemäße Fahrt verwendbar sind. Es versteht sich, dass ein Open-Loop Transportsystem zusätzlich auch die Verwendung von proprietären Ticketmedien erlauben kann.

Ein anmeldungsgemäßes Ticketmedium ist insbesondere ein tragbares Medium mit mindestens einem auslesbaren Datenspeicher bzw. Speichermittel, eingerichtet zumindest zum Speichern einer elektronischen Mediumkennung. Vorzugsweise kann das Ticketmedium ein kartenbasiertes Ticketmedium sein, wie ein kreditkartenbasiertes und/oder debitkartenbasiertes Ticketmedium. Vorzugswiese kann das Ticketmedium eine Kreditkarte und/oder eine Debitkarte sein. Auch kann das kartenbasierte Ticketmedium ein mobiles Endgerät sein, auf dem eine Kreditkarte und/oder Debitkarte elektronisch abgebildet ist bzw. mit dem eine Kreditkarte und/oder Debitkarte elektronisch (eineindeutig) verknüpft ist. Nicht abschließende Beispiele eines solchen Konzepts sind Apple Pay, Google Pay oder PayPal.

Beispielhafte und nicht abschließende mobile Endgeräte sind hierbei Smartphones, Tablet-Computer, mobile Spielkonsolen, Laptops, Netbooks, Datenbrillen, Smart-Watches und ähnliche Wearables.

Eine elektronische Mediumkennung meint insbesondere, dass diese in ihrer Gesamtheit in dem Datenspeicher des Ticketmediums gespeichert ist. Insbesondere ist eine Ticketmediumschnittstelle, beispielweise mit einer (kontaktlosen oder kontraktbehafteten) Schnittstelle, für die Erfassung der elektronischen Mediumkennung erforderlich. Falls das Ticketmedium beispielweise eine kontaktlose Kreditkarte ist, dann ist die elektronische Mediumkennung die "electronic Primary Account Number" (EPAN) dieser Karte. Die EPAN besteht in der Regel aus der "Primary Account Number" (PAN), die der aufgedruckten oder eingeprägten Kartennummer entspricht, und einer Card-Sequence-Number, die das vorliegende Kartenindividuum kennzeichnet.

Die (kontaktlose oder kontraktbehaftete) Schnittstelle für die Auslesung korrespondiert hierbei zu der Schnittstelle des Ticketmediums. Nicht abschließende Beispiele für kontaktbehaftete Ticketmediumschnittstellen sind Magnetstreifen und Europay-Mastercard-VISA-Chips (EMV-Chips); Beispiele für kontaktlose Ticketmediumschnittstellen sind Nearfield Communication-Schnittstellen (NFC-Schnittstellen) gemäß ISO 14443. Für das oben genannte Beispiel der elektronischen Kreditkarte ist die EPAN, also die Mediumkennung, über diese Schnittstelle kontaktlos auslesbar.

Ferner ist anmeldungsgemäß insbesondere vorgesehen, dass die elektronische Mediumkennung eine (systemweit) eineindeutige elektronische Mediumkennung ist. Dies meint insbesondere, dass ein Ticketmedium durch diese Mediumkennung (systemweit) eineindeutig identifiziert werden kann. Insbesondere ermöglicht eine elektronische Mediumkennung bei Kreditkarten und/oder Debitkarten eine Differenzierung zwischen verschiedenen Kartenindividuen, die jeweils die gleiche Kreditkartennummer aufweisen, jedoch unterschiedliche elektronische Mediumkennungen. Hierbei kann aus der jeweiligen elektronischen Mediumkennung jedoch die Kreditkartennummer ermittelt werden. Verschiedene Kartenindividuen können beispielsweise Partnerkarten sein (dieselbe Kreditkartennummer für unterschiedliche Nutzer) oder Folgenkarten (abgelaufene und neue Kreditkarte für denselben Nutzer).

Gemäß einer bevorzugten Ausführungsform kann die elektronische Mediumkennung eine elektronische Primary Account Number (ePAN) sein. Die ePAN enthält die bekannte lesbare PAN, die auf einer Debit- oder Kreditkarte aufgedruckt, geprägt oder graviert ist, plus zusätzliche kodierte Daten, wie z.B. die Kartenfolgenummer (card sequence number), die das vorliegenden Kartenindividuum identifiziert. Die ePAN muss also elektronisch aus der Karte ausgelesen werden und ist nicht menschenlesbar.

Die ePAN identifiziert insbesondere eineindeutig Ticketmedien, wie individuelle Kreditkarten und/oder Debitkarten und/oder (vorbeschriebene) mobile Endgeräte. Aus der ePAN können, insbesondere mit Hilfe von Datenbanken, Land, Kreditinstitut, Bankleitzahl und/oder Kontonummer ermittelt werden. In einfacher Weise kann eine Abrechnung einer Fahrt ermöglicht werden.

Anmeldungsgemäß weist das Hintergrundsystem mindestens ein Abrechnungsmodul auf, um (insbesondere in herkömmlicher Weise) eine durchgeführte Fahrt abzurechnen, basierend auf erhaltenen Start- und Enddatensätzen. Jeder Startdatensatz und jeder Enddatensatz enthält jeweils eine Mediumkennungsreferenz, welche eine Zuordnung von einem Startdatensatz zu einem Enddatensatz erlaubt. Insbesondere werden Startdatensatz und Enddatensatz einander zugeordnet, wenn sie identische Mediumkennungsreferenzen haben. Ein Startdatensatz wird insbesondere bei einem Start bzw. Beginn einer Fahrt generiert, also beispielsweise bei einem Betreten eines zahlungspflichtigen Raums, wie ein Transportfahrzeug, ein Bahnhofsbereich etc. Ein Enddatensatz wird insbesondere bei einem Ende einer Fahrt generiert, also beispielsweise bei einem Verlassen eines zahlungspflichtigen Raums, wie ein Transportfahrzeug, ein Bahnhofsbereich etc. In ihrer Datenstruktur können Startdatensätze und Enddatensätze identisch sein.

Die Mediumkennungsreferenz in einem Start- bzw. Enddatensatz ist ein Wert, der aus der Mediumkennung des verwendeten Open-Loop Mediums bestimmt wird, insbesondere berechnet wird. In einem einfachen Fall kann die Mediumkennungsreferenz identisch sein mit der Mediumkennung, In Anwendung des Sicherheitsstandards zur Abwicklung von Kreditkartentransaktionen (Payment Card Industry Data Security Standard, PCI DSS) ist die Mediumkennungsreferenz typischerweise ein Hash-Wert der Mediumkennung, also beispielsweise der Hash-Wert einer ePAN.

Das Transportsystem kann insbesondere eine Mehrzahl von Validatorvorrichtungen umfassen. Eine Validatorvorrichtung ist eine Vorrichtung eines Transportsystems, die eingesetzt wird, um die ordnungsgemäße Fahrt durch einen Nutzer zu erfassen. Eine Validatorvorrichtung kann beispielsweise an einem Zugang (z.B. Eingang und/oder Ausgang) zu einem zahlungspflichtigen Raum angeordnet sein. Das Betreten dieses Raums ist insbesondere gleichbedeutend mit der Durchführung einer Fahrt. Der zahlungspflichtige Raum kann beispielsweise der Innenraum eines Transportfahrzeugs sein, oder ein (abgegrenzter) Vorraum zu einem Transportfahrzeug, wie ein Bahnsteig oder dergleichen.

Ein Erfassen der Fahrt durch eine Validatorvorrichtung umfasst insbesondere ein Erfassen der elektronischen Mediumkennung eines Ticketmediums, beispielsweise im Rahmen eines Anmeldevorgangs ("Check-In") und/oder Abmeldevorgangs ("Check-Out"). Für eine ordnungsgemäße Fahrt ist es beispielsweise erforderlich sein, dass bei einem Betreten des zahlungspflichtigen Raums sich der Nutzer in dem Transportsystem anmeldet ("Check-In"), indem insbesondere zumindest eine elektronische Mediumkennung im Rahmen eines Anmeldevorgangs durch die Validatorvorrichtung erfasst wird.

In entsprechender Weise kann es erforderlich sein, dass bei einem Verlassen des zahlungspflichtigen Raums sich der Nutzer in dem Transportsystem abmeldet ("Check-Out"), indem insbesondere zumindest eine elektronische Mediumkennung im Rahmen eines Abmeldevorgangs durch die Validatorvorrichtung erfasst wird.

Hierbei kann optional eine Durchgangssperre an dem Zugang vorgesehen sein, welche in Zusammenwirkung mit der Validatorvorrichtung (in herkömmlicher Weise) den Zugang freigibt und/oder sperrt.

Ferner erfolgt, durch die Validatorvorrichtung, ein Übertragen des Startdatensatzes bzw. des Enddatensatzes an das (entfernt von der Validatorvorrichtung) angeordnete Hintergrundsystem. Die mindestens eine Validatorvorrichtung und das Hintergrundsystem können kommunikationstechnisch über mindestens ein (drahtloses und/oder drahtgebundenes) Kommunikationsnetz verbunden sein. Die Übertragung der Datensätze erfolgt vorzugsweise verschlüsselt. Anders ausgedrückt, kann die Validatorvorrichtung einen Datensatz verschlüsseln und das Hintergrundsystem diesen Datensatz wieder entschlüsseln.

Ein Datensatz (Start- oder Enddatensatz) enthält ferner mindestens ein Transportinformationsdatum. Das mindestens eine Transportinformationsdatum ist insbesondere eine Angabe, die eine (zeit- und/oder entfernungsbasierte) Abrechnung der durchgeführten Fahrt ermöglicht.

Gemäß einer Ausführungsform des anmeldungsgemäßen Hintergrundsystems kann das mindestens eine Transportinformationsdatum ausgewählt sein aus der Gruppe, umfassend:
- einen Zeitstempel der Erfassung der elektronischen Mediumkennung durch die Validatorvorrichtung,
- eine Kennung der Validatorvorrichtung (die die elektronische Mediumkennung erfasst hat),
- eine Ortsangabe der Validatorvorrichtung (bei der Erfassung der elektronischen Mediumkennung),
- eine Kennung eines Transportfahrzeugs der Validatorvorrichtung,
- eine Kennung einer Transportstation (z.B. Bahnhof, Haltestelle) der Validatorvorrichtung.

Vorzugsweise kann ein Datensatz (Start- oder Enddatensatz) eine Zeitangabe, insbesondere in Form eines Zeitstempels, enthalten. Der Zeitstempel (z.B. Kalenderdatum und Uhrzeit) kann insbesondere den Erfassungszeitpunkt der Erfassung der Mediumkennung durch die Validatorvorrichtung angeben. Bei einem Startdatensatz repräsentiert der Zeitstempel insbesondere den Beginn einer durchgeführten Fahrt und bei einem Enddatensatz repräsentiert der Zeitstempel insbesondere das Ende durchgeführten Fahrt.

Alternativ oder vorzugsweise zusätzlich kann ein Datensatz (Start- oder Enddatensatz) eine Orts- bzw. Standortangabe der (die Mediumkennung erfassenden) Validatorvorrichtung umfassen. Eine Orts- bzw. Standortangabe meint insbesondere eine Angabe, aus der Standort bzw. Installationsort der Validatorvorrichtung zumindest abgeleitet werden kann, also den Standort bei der Erfassung der Mediumkennung. Beispielsweise kann die Standortangabe eine Kennung der Validatorvorrichtung umfassen, aus der mit Hilfe einer Standortdatenbank der Standort der Validatorvorrichtung abgeleitet werden kann. Alternativ oder zusätzlich kann die Standortangabe geographische Positionsdaten (z.B. GPS-Koordinaten) umfassen.

Insbesondere bei mobilen Validatorvorrichtungen, also bei solchen, die in Transportfahrzeugen eingebaut sind, kann die Standortangabe aus fahrzeugseitig vorhandener Infrastruktur ermittelt werden; alternativ kann die Standortangabe auch aus dem Zeitstempel und den Daten der Betriebsführung des Verkehrssystems im Hintergrundsystem ermittelt werden.

Bei einem Startdatensatz repräsentiert die Ortsangabe insbesondere den Startpunkt bzw. Startbahnhof einer durchgeführten Fahrt und bei einem Enddatensatz repräsentiert die Ortsangabe insbesondere den Endpunkt bzw. Zielbahnhof einer durchgeführten Fahrt.

Das Abrechnungsmodul ist eingerichtet, basierend auf einem Startdatensatz und einem über die jeweilige Mediumkennungsreferenz zuordenbaren Enddatensatz die durchgeführte Fahrt abzurechnen. Insbesondere kann durch das Abrechnungsmodul ein Generieren eines Abrechnungsdatensatzes erfolgen. Der Abrechnungsdatensatz kann insbesondere für eine Abrechnung generiert und anschließend durch das Hintergrundsystem (an den entsprechenden Nutzer) ausgegeben werden.

Anmeldungsgemäß umfasst das Hintergrundsystem ein dynamisches Tarifbestimmungsmodul, eingerichtet zum dynamischen Bestimmen eines augenblicklichen Tarifdatums, basierend auf mindestens einem (vorgegebenen) Tarifkriterium und einer angefragten Fahrtangabe. Das augenblickliche Tarifdatum unterscheidet sich von dem fest vorgegebenen Tarifdatum. Insbesondere wird anmeldungsgemäß zwischen einem statischen Tarifdatum, also dem fest vorgegebenen und insbesondere unveränderlichen Tarifdatum, und einem dynamischen Tarifdatum, also einem augenblicklichen und insbesondere veränderlichen Tarifdatum, unterschieden.

Eine angefragte Fahrtangabe gibt insbesondere eine Fahrt an, die von einem Nutzer (potentiell) durchgeführt werden wird. Es handelt sich also um eine Fahrt, die in der Zukunft (und damit nicht unmittelbar) in Anspruch genommen werden wird.

Gemäß einer Ausführungsform des anmeldungsgemäßen Hintergrundsystems kann die angefragte Fahrtangabe mindestens ein Fahrtdatum umfassen, ausgewählt aus der Gruppe, umfassend:
- Startort der angefragten Fahrt,
- Zielort der angefragten Fahrt,
- Kalenderdatum der angefragten Fahrt,
- Startzeitpunkt der angefragten Fahrt,
- Endzeitpunkt der angefragten Fahrt,
- eine einem angefragten Transportfahrzeug zugeordnete Kennung.

Das mindestens eine Fahrtdatum einer Fahrtangabe kann insbesondere die angefragte Fahrt (systemweit) eineindeutig identifizieren.

Ein Startort bzw. eine Starthaltestelle repräsentiert insbesondere den Ort, an dem Fahrt gestartet wird, also der Nutzer einen zahlungspflichtigen Raum betritt. Ein Zielort bzw. eine Endhaltestelle repräsentiert insbesondere den Ort, an dem Fahrt enden wird, also der Nutzer einen zahlungspflichtigen Raum (final) verlässt.

Das Kalenderdatum ist insbesondere der (planmäßige) Tag der angefragten Fahrt.

Der Startzeitpunkt ist insbesondere der (planmäßige) Abfahrtszeitpunkt eines bestimmten Transportfahrzeugs von einem bestimmten Startort der angefragten Fahrt, also insbesondere einer bestimmten Starthaltestelle bzw. einem bestimmten Startbahnhof.

Der Endzeitpunkt ist insbesondere der (planmäßige) Ankunftszeitpunkt eines bestimmten Transportfahrzeugs an einem bestimmten Zielort der angefragten Fahrt, also insbesondere einer bestimmten Endhaltestelle bzw. einem bestimmten Endbahnhof.

Ferner kann ein Transportfahrzeug (systemweit) eine eindeutige Kennung aufweisen. Für eine eindeutige Identifizierung einer bestimmten und gewünschten Fahrt kann eine angefragte Fahrtangabe vorzugsweise einen Startort und einen Zielort und zumindest einen Startzeitpunkt oder einen Endzeitpunkt enthalten.

Insbesondere können bei einer Nutzungsanfrage mögliche Startzeitpunkte und Endzeitpunkte für eine angefragte Fahrt dem Nutzer automatisch, basierend auf einem hinterlegten Fahrplan, zur Auswahl angeboten werden, sobald Startort, Zielort und Kalenderdatum der angefragten Fahrt eingegeben sind.

Das mindestens eine Tarifkriterium meint insbesondere ein Auslastungssteuerungskriterium, mit dem eine Auslastung eines zahlungspflichtigen Raums zumindest potentiell beeinflussbar ist. Das Tarifkriterium weist insbesondere eine Beziehung zu der angefragten Fahrangabe und zu dem fest vorgegebenen Tarifdatum auf. Abhängig von einer Auswertung dieser Beziehung bestimmt das Tarifbestimmungsmodul insbesondere ein augenblickliches Tarifdatum.

Beispielsweise kann das Tarifkriterium vorgeben, dass das augenblickliche Tarifdatum (z.B. ein zu zahlender Geldbetrag für die gewünschte Fahrtangabe) geringer ist als das fest vorgegebene Tarifdatum (z.B. auch ein zu zahlender Geldbetrag für die gewünschte Fahrtangabe), wenn für die angefragte Fahrtangabe eine geringe Auslastung prognostiziert wird, zumindest zum Zeitpunkt des Erhalts der Nutzungsanfrage.

Insbesondere kann das Tarifkriterium derart sein, dass das augenblickliche Tarifdatum abhängig von diesem Tarifkriterium und der angefragten Fahrtangabe umso geringer bestimmt werden kann, je geringer die Auslastung des zu verwendenden mindestens einen Transportfahrzeugs zumindest prognostiziert wird.

Umgekehrt kann das Tarifkriterium so gewählt sein, dass das augenblickliche Tarifdatum (z.B. ein zu zahlender Geldbetrag für die gewünschte Fahrtangabe) größer oder gleich ist als/wie das fest vorgegebene Tarifdatum (z.B. auch ein zu zahlender Geldbetrag für die gewünschte Fahrtangabe), wenn für die angefragte Fahrtangabe eine hohe Auslastung zumindest prognostiziert wird.

Es versteht sich, dass eine minimale Tarifgrenze und/oder eine maximale Tarifgrenze, z.B. das fest vorgegebene Tarifdatum, vorgebbar ist/sind.

Ein augenblickliches Tarifdatum meint insbesondere ein Tarifdatum, welches nur eine beschränkte zeitliche Gültigkeit hat. Die zeitliche Länge der Gültigkeitszeitdauer kann vorgegeben sein (z.B. max. 30 min, 15 min, 5 min, 30 sec, 10 sec etc.).

Bei Varianten der Anmeldung kann die zeitliche Gültigkeitszeitdauer variabel bzw. dynamisch vorgebbar sein, abhängig von mindestens einem Zeitkriterium (z.B. Anzahl der erhaltenen Anfragen von unterschiedlichen Nutzern in einem bestimmten Zeitfenster, augenblickliche Tageszeit etc.).

Anmeldungsgemäß weist das Hintergrundsystem ein Ausgabemodul auf, eingerichtet zum Ausgeben des für die angefragte Fahrtangabe bestimmten augenblicklichen Tarifdatums. Insbesondere kann das bestimmte augenblickliche Tarifdatum an die anfragende Entität (insbesondere an das Nutzerendgerät des Nutzers) ausgegeben werden.

Darüber hinaus weist das Hintergrundsystem ein Speichermodul auf, eingerichtet zum Speichern eines Fahrtdatensatzes, enthaltend das ausgegebene augenblickliche Tarifdatum, die angefragte Fahrtangabe und eine Mediumkennungsreferenz bei Erhalt eines Bestätigungsdatensatzes als Antwort auf das für die angefragte Fahrtangabe ausgegebene augenblickliche Tarifdatum. Die Mediumkennungsreferenz kann vorzugsweise in dem Bestätigungsdatensatz enthalten sein. Es versteht sich, dass diese auch in einer anderen Nachricht alternativ oder zusätzlich übertragen oder aus einem Nutzerkonto ermittelt werden kann. Der Bestätigungsdatensatz gibt zumindest implizit an, dass der Nutzer das ausgegebene augenblickliche Tarifdatum akzeptiert und die angefragte Fahrtangabe für das ausgegebene augenblickliche Tarifdatum in Anspruch nehmen wird.

Durch das (temporäre) Speichern des Fahrtdatensatzes kann sichergestellt werden, dass bei einer anschließenden Inanspruchnahme der angefragten Fahrt das ausgegebene und gespeicherte augenblickliche Tarifdatum zur Anwendung kommt, und nicht das fest vorgegebene Tarifdatum.

So ist anmeldungsgemäß das Abrechnungsmodul eingerichtet zum Abrechnen der angefragten Fahrtangabe, basierend auf dem gespeicherten Fahrtdatensatz, zumindest bei einer Detektion einer Inanspruchnahme der für die Mediumkennungsreferenz gespeicherten Fahrtangabe. Anders ausgedrückt, kann zumindest bei einer Feststellung, dass die angefragte Fahrtangabe tatsächlich wie angefragt in Anspruch genommen wurde, eine entsprechende Abrechnung erfolgen. Bei Varianten der Anmeldung kann eine Abrechnung stets erfolgen, unabhängig von einer Feststellung, dass die angefragte Fahrtangabe tatsächlich wie angefragt in Anspruch genommen wurde.

Gemäß einer weiteren Ausführungsform des anmeldungsgemäßen Hintergrundsystems kann das Hintergrundsystem ferner umfassen:
- mindestens ein Empfangsmodul, eingerichtet zum Empfangen einer Nutzungsanfrage von einem Nutzerendgerät, wobei die Nutzungsanfrage zumindest die angefragte Fahrtangabe umfasst,
   und/oder
- mindestens ein Empfangsmodul, eingerichtet zum Empfangen einer Nutzungsbestätigung von einem Nutzerendgerät, enthaltend den Bestätigungsdatensatz.

Ein Empfangsmodul kann eine Kommunikationsschnittstelle zu einem (drahtlosen und/oder drahtgebundenen) Kommunikationsnetz umfassen.

Beispielsweise kann ein Empfangsmodul eine Webschnittstelle (auch Webinterface genannt) sein, die es einem Nutzer ermöglicht, eine Nutzungsanfrage an das Hintergrundsystem zu übertragen. Bei anderen Varianten der Anmeldung kann ein Empfangsmodul zum Empfangen und/oder Verarbeiten von übertragenen Nachrichten eingerichtet sein.

Eine Nutzungsanfrage enthält zumindest die zuvor beschriebene Fahrtangabe. Optional kann eine Nutzungsanfrage weitere Daten enthalten, wie eine Mediumkennungsreferenz, und/oder ggf. weitere Nutzerdaten, wie Nutzername, Adressdaten des Nutzers etc.

Alternativ oder vorzugsweise zusätzlich kann das Empfangsmodul eingerichtet sein zum Empfangen einer Nutzungsbestätigung von einem Nutzerendgerät, enthaltend den zuvor beschriebenen Bestätigungsdatensatz.

Ein Nutzerendgerät kann ein zuvor beschriebenes mobiles Endgerät sein oder ein stationäres Endgerät, wie ein stationärer Personalcomputer oder dergleichen.

Gemäß einer bevorzugten Ausführungsform des anmeldungsgemäßen Hintergrundsystems kann die Mediumkennungsreferenz eine in dem Hintergrundsystem registrierte Mediumkennungsreferenz sein. Eine registrierte Mediumkennungsreferenz kann in einem Nutzerdatensatz in dem Hintergrundsystem gespeichert sein. Der Nutzerdatensatz kann mindestens ein weiteres Nutzerdatum umfassen, ausgewählt aus der Gruppe, umfassend:
- Nutzername,
- Adressdaten des Nutzers,
- Nutzerpasswort,
- Abrechnungsdaten,
- Fahrttarifdaten,
- Kontodaten,
- Daten weiterer Zahlmedien,
- Zugehörigkeit zu einer Nutzergruppe.

Der Betrieb des Transportsystems kann vereinfacht und insbesondere für einen Nutzer komfortabler gestaltet werden, wenn ein Nutzer in dem Transportsystem registriert ist. Eine Registrierung meint vorliegend insbesondere, dass das für die Fahrten verwendete Ticketmedium des Nutzers registriert ist/wird, also insbesondere ein Nutzerdatensatz (zum Beispiel in Form eines Nutzerkontos) erstellt ist/wird, der zumindest die Mediumkennungsreferenz des Ticketmediums des Nutzers enthält. Vorzugsweise können weitere Nutzerdaten enthalten sein.

Wenn ein Nutzerdatensatz bzw. ein Nutzerkonto vorhanden ist, dann kann das Speichermodul eingerichtet sein, den Fahrtdatensatz in dem Nutzerkonto zu speichern oder zumindest eine Verknüpfung mit diesem vorzusehen.

Gemäß einer weiteren Ausführungsform des anmeldungsgemäßen Hintergrundsystems kann das Hintergrundsystem ferner umfassen:
- mindestens ein Zuordnungsmodul, eingerichtet zum Zuordnen eines erhaltenen Enddatensatzes zu einem gespeicherten Fahrtdatensatz, basierend auf der jeweils enthaltenen Mediumkennungsreferenz, und
- mindestens ein Prüfungsmodul, eingerichtet zum Überprüfen, ob das mindestens eine Transportinformationsdatum des Enddatensatzes zu der gespeicherten Fahrtangabe des Fahrtdatensatzes korrespondiert (wenn eine Zuordnung zwischen den genannten Datensätzen erfolgen konnte).

Bei einem Empfang eines Enddatensatzes kann die Mediumkennungsreferenz aus diesem Datensatz extrahiert werden. Dann kann durch das Zuordnungsmodul nach einem gespeicherten Fahrtdatensatz gesucht werden, der diese Mediumkennungsreferenz enthält. Wenn ein Fahrtdatensatz durch das Zuordnungsmodul identifiziert werden kann, erfolgt eine entsprechende Zuordnung der Datensätze.

Anschließend kann durch das Prüfungsmodul überprüft werden, ob die Fahrtangabe tatsächlich wie angefragt beansprucht wurde. Hierzu kann das Prüfungsmodul zumindest überprüfen, ob das mindestens eine Transportinformationsdatum (z.B. der Zielbahnhof (z.B. abgeleitet aus der Validatorkennung) und der Zeitstempel der Erfassung der elektronischen Mediumkennung der Validatorvorrichtung) des Enddatensatzes zu der gespeicherten Fahrtangabe (z.B. Zielbahnhof und Endzeitpunkt) korrespondiert. Wenn beispielsweise die Ortsangaben (z.B. Bahnhofsangaben) identisch sind und die Zeitangaben zumindest in einem vorgegebenen Toleranzbereich liegen (hier kann auch eine evtl. Verspätung eines Transportfahrzeugs berücksichtigt werden), dann kann festgestellt werden, dass die Fahrtangabe tatsächlich wie angefragt beansprucht wurde. Wird hingegen eine Abweichung festgestellt, also wenn das mindestens eine Transportinformationsdatum des Enddatensatzes nicht zu der gespeicherten Fahrtangabe korrespondiert, wurde die Fahrtangabe nicht wie angefragt beansprucht.

Es sei angemerkt, dass ein Startdatensatz und ein Enddatensatz grundsätzlich gleich gebildet sein können. Ferner sei angemerkt, dass das Zuordnungsmodul insbesondere zusätzlich eingerichtet sein kann, bei Erhalt eines Enddatensatzes nach einem zugehörigen Startdatensatz zu suchen. Wenn kein Startdatensatz und kein Fahrtdatensatz vorhanden ist, kann gefolgert werden, dass es sich bei dem erhaltenen Datensatz um einen Startdatensatz handelt.

Optional kann zusätzlich (aber auch alternativ) vorgesehen sein, dass mindestens ein Zuordnungsmodul eingerichtet ist zum Zuordnen eines erhaltenen Startdatensatzes zu einem gespeicherten Fahrtdatensatz, basierend auf der jeweils enthaltenen Mediumkennungsreferenz. Mindestens ein Prüfungsmodul kann eingerichtet sein zum Überprüfen, ob das mindestens eine Transportinformationsdatum des Startdatensatzes zu der gespeicherten Fahrtangabe des Fahrtdatensatzes korrespondiert (wenn eine Zuordnung zwischen den genannten Datensätzen erfolgen konnte), insbesondere in analoger Weise zur Überprüfung eines zugeordneten Enddatensatzes. Indem sowohl ein Startdatensatz als auch ein Enddatensatz zugeordnet und insbesondere geprüft werden, kann mit einer noch höheren Sicherheit gewährleistet werden, dass ein Nutzer eine Fahrt wie angefragt durchgeführt hat (und beispielsweise nicht bereits vorher in ein Transportfahrzeug eingestiegen ist und/oder es später verlassen hat).

Gemäß einer weiteren bevorzugten Ausführungsform des anmeldungsgemäßen Hintergrundsystems kann das Abrechnungsmodul derart eingerichtet sein, dass nur dann die angefragte Fahrtangabe entsprechend dem gespeicherten augenblicklichen Tarifdatum abgerechnet wird, wenn durch das Prüfungsmodul festgestellt wird, dass das mindestens eine Transportinformationsdatum (des End- und/oder Startdatensatzes) zu der gespeicherten Fahrtangabe des Fahrtdatensatzes korrespondiert. Hierdurch kann sichergestellt werden, dass ein Nutzer insbesondere nur dann einen geänderten (insbesondere geringeren) Betrag (im Vergleich zu dem fest vorgegebenen (Standard-) Tarifdatum) entrichten muss, wenn der Nutzer tatsächlich wie angefragt die Fahrt durchgeführt hat. Andernfalls kann eine Abrechnung beispielsweise auf dem fest vorgegebenen Tarifdatum oder einer Kombination aus dem fest vorgegebenen und dem gespeicherten augenblicklichen Tarifdatum basieren.

Gemäß einer besonders bevorzugten Ausführungsform des anmeldungsgemäßen Hintergrundsystems kann der Bestätigungsdatensatz den Startdatensatz ersetzen, also insbesondere den Anmeldevorgang an einer Validatorvorrichtung. Dies verbessert die Nutzerfreundlichkeit noch weiter. So kann der Nutzer einen zahlungspflichtigen Raum ohne eine zuvor beschriebene Anmeldung betreten. Die Anmeldung selbst erfolgt durch das Ausgeben des Bestätigungsdatensatzes. Anders ausgedrückt, kann eine Web-Anmeldung erfolgen. Lediglich beim Verlassen eines zahlungspflichtigen Raums kann eine zuvor beschriebene Abmeldung (und damit eine Generierung eines Enddatensatzes) erforderlich sein.

Wie bereits beschrieben wurde, kann das mindestens eine Tarifkriterium vorzugsweise ein Auslastungssteuerkriterium sein und insbesondere der Auslastungsteuerung des mindestens einen Transportfahrzeugs des Transportsystems dienen.

Gemäß einer Ausführungsform des anmeldungsgemäßen Hintergrundsystems kann das mindestens eine Tarifkriterium ein Zeitdifferenzkriterium sein. Das Zeitdifferenzkriterium kann eine Abhängigkeit zwischen einer Zeitdifferenz und dem augenblicklichen Tarifdatum angeben, wobei die Zeitdifferenz insbesondere die Zeitdifferenz zwischen dem Empfangszeitpunkt einer (zuvor beschriebenen) Nutzungsanfrage durch das Hintergrundsystem und einem Startzeitpunkt der angefragten Fahrt ist.

Vorzugsweise kann das Zeitdifferenzkriterium in Form einer Zeitdifferenztabelle vorliegen. In dieser Tabelle kann die Zeitdifferenz zwischen dem Empfangszeitpunkt der Nutzungsanfrage und einem (geplanten oder IST-) Startzeitpunkt der angefragten Fahrtangabe aufgeführt sein. Jedem Zeitdifferenzwert bzw. -bereich kann ein augenblickliches Tarifdatum zugeordnet sein. Ein Beispiel einer Zeitdifferenztabelle ist in nachfolgender Tabelle 1 dargestellt.

**Tabelle 1**

| **Zeitdifferenz zwischen Empfangszeitpunkt der Nutzungsanfrage und einem Startzeitpunkt des angefragten Transportfahrzeugs** | **Augenblickliches Tarifdatum (in % abhängig vom fest vorgegebenen Tarifdatum TD_{F})** |
|---|---|
| Größer als 1 Tag | -15 % |
| 24 h bis 12 h | - 10 % |
| 12 h bis 3 h | -5% |
| 3 h bis 1 h | 0 |
| 1 h bis 0 h | +2% |

Es versteht sich, dass eine Tabelle lediglich ein Beispiel ist (z.B. kann das Kriterium in Form einer mathematischen Funktion vorliegen) und/oder eine Tabelle andere Einträge (beispielsweise absolute Beträge, andere Zeitdifferenzbereiche) umfassen kann.

Das dynamische Tarifbestimmungsmodul kann eingerichtet sein, bei Erhalt einer Nutzungsanfrage die Zeitdifferenz zwischen dem Empfangszeitpunkt der Nutzungsanfrage und einem geplanten Startzeitpunk oder IST-Startzeitpunkt (bei dem eine evtl. bereits vorliegende Verspätung des Transportfahrzeugs berücksichtigt wird) der angefragten Fahrtangabe zu bestimmen. Dann kann abhängig von der bestimmten Zeitdifferenz und dem Zeitdifferenzkriterium (z.B. die Zeitdifferenztabelle) das augenblickliche Tarifdatum bestimmt werden.

Mit Blick auf die Tabelle 1 bestimmt das dynamische Tarifbestimmungsmodul bei einer Zeitdifferenz von 15 h ein augenblickliches Tarifdatum TD_{A} = 0,85 ^{∗} TD_{F}, bei einer Zeitdifferenz von 2 h ein augenblickliches Tarifdatum TD_{A} = TD_{F} und beispielsweise bei einer Zeitdifferenz von 0,5 h ein augenblickliches Tarifdatum TD_{A} = 1,02 ^{∗} TD_{F}. Hierbei ist TD_{F} das fest vorgegebene Tarifdatum. Durch ein entsprechendes Kriterium kann frühzeitig die Auslastung eines Transportfahrzeugs erfasst und dies bei der Auslastungssteuerung berücksichtigt werden.

Gemäß einer besonders bevorzugten Ausführungsform des anmeldungsgemäßen Hintergrundsystems kann das mindestens eine Tarifkriterium ein Transportauslastungskriterium sein. Das Transportauslastungskriterium kann eine Abhängigkeit zwischen einer Transportauslastung mindestens eines Transportfahrzeugs und dem augenblicklichen Tarifdatum angeben. Dem dynamischen Tarifbestimmungsmodul kann vorzugsweise eine prognostizierte und/oder gemessene Auslastung eines Transportfahrzeugs der angefragten Fahrtangabe bereitgestellt werden.

Das Transportauslastungskriterium kann vorzugsweise in Form einer Transportauslastungstabelle vorliegen. In dieser Tabelle kann die Differenz der Transportauslastung zu einer Vollauslastung bzw. maximalen Transportkapazität des Transportfahrzeugs aufgeführt sein. Jedem Transportauslastungswert bzw. -bereich kann ein augenblickliches Tarifdatum zugeordnet sein. Ein Beispiel einer Transportauslastungstabelle ist in nachfolgender Tabelle 2 dargestellt.

**Tabelle 2**

| **Differenz der Transportauslastung zu einer Vollauslastung des angefragten Transportfahrzeugs** | **Augenblickliches Tarifdatum (in % abhängig vom fest vorgegebenen Tarifdatum TD_{F})** |
|---|---|
| Kleiner als 40 % | -15 % |
| 40 % bis 60 % | - 10 % |
| 60 % bis 80 % | -5% |
| 80 % bis 95 % | 0 |
| 95 % h bis 110 % | +2% |

Es versteht sich, dass eine Tabelle lediglich ein Beispiel ist (z.B. kann das Kriterium in Form einer mathematischen Funktion vorliegen) und/oder eine Tabelle andere Einträge (beispielsweise absolute Beträge, andere Bereiche) umfassen kann.

Insbesondere kann das anmeldungsgemäße Hintergrundsystem mindestens ein Auslastungsbestimmungsmodul umfassen, eingerichtet zum Bestimmen der Auslastung eines Transportfahrzeugs.

Beispielsweise kann in dem Hintergrundsystem eine Datenbank mit historischen Auslastungsdaten von Transportfahrzeugen vorhanden sein. Basierend auf den historischen Auslastungsdaten kann das Auslastungsbestimmungsmodul die Auslastung eines Transportfahrzeugs bestimmen, insbesondere prognostizieren. Hierbei kann eine KI (künstliche Intelligenz) Technologie zum Einsatz kommen.

Alternativ oder zusätzlich kann das Auslastungsbestimmungsmodul eingerichtet sein zum Bestimmen der Auslastung eines Transportfahrzeugs, basierend auf den für dieses Transportfahrzeug tatsächlich vorliegenden Startdatensätzen, also der Anzahl von tatsächlich in diesem Transportfahrzeug angemeldeten Nutzern. Dem Auslastungsbestimmungsmodul kann die Transportkapazität des Transportfahrzeugs bekannt sein (insbesondere aus einer entsprechenden Datenbank des Hintergrundsystems). Vorzugsweise zusätzlich, aber auch alternativ, kann das Bestimmen der Auslastung des Transportfahrzeugs auf den für dieses Transportfahrzeug tatsächlich vorliegenden gespeicherten Fahrtdatensätzen basieren. Hierdurch kann die Auslastung eines Transportfahrzeugs präzise und in einfacher Weise bestimmt werden.

Bei anderen Varianten der Anmeldung kann alternativ oder zusätzlich mindestens ein anderes bzw. weiteres Datum berücksichtigt werden, wie eine durch mindestens einen Sensor (z.B. Kamera mit Bildauswertungsmodul, Durchgangszähler eines Gates etc.) erfasste Personenanzahl, die relevant ist für ein Transportfahrzeug, Anzahl an erhaltenen Nutzungsanfragen für eine bestimmte Fahrtangabe (z.B. innerhalb einer bestimmten Zeitdauer) etc.

Das dynamische Tarifbestimmungsmodul kann eingerichtet sein, bei Erhalt einer Nutzungsanfrage eine bereitgestellte und bestimmte (prognostizierte und/oder gemessene) Auslastung des angefragten Transportfahrzeugs (vorzugsweise (eindeutig) bestimmt aus dem Inhalt der Nutzungsanfrage) abzufragen. Dann kann abhängig von dieser Auslastung und dem Transportauslastungskriterium (z.B. die Transportauslastungstabelle) das augenblickliche Tarifdatum bestimmt werden.

Mit Blick auf die Tabelle 2 bestimmt das dynamische Tarifbestimmungsmodul bei einer (prognostizierten und/oder gemessenen) Auslastung von 50 % ein augenblickliches Tarifdatum TD_{A} = 0,9 ^{∗} TD_{F}, bei einer (prognostizierten und/oder gemessenen) Auslastung von 85 % ein augenblickliches Tarifdatum TD_{A} = TD_{F} und beispielsweise bei einer (prognostizierten und/oder gemessenen) Auslastung von 100 % ein augenblickliches Tarifdatum TD_{A} = 1,02 ^{∗} TD_{F}.

Alternativ oder zusätzlich kann, gemäß einer weiteren Ausführungsform des anmeldungsgemäßen Hintergrundsystems, das mindestens eine Tarifkriterium ein meteorologisches Kriterium sein. Beispielsweise kann vorab bestimmt werden, wie sich bestimmte meteorologische Bedingungen/Kriterien (z.B. Temperatur, Windgeschwindigkeit, Niederschlagswahrscheinlichkeit, Niederschlagsart (z.B. Schnee, Regen, Hagel) etc.) auf die Auslastung von Transportfahrzeugen auswirken.

Wenn beispielsweise festgestellt wird, dass bei einer ersten meteorologischen Bedingung eine Auslastung eines Transportfahrzeugs geringer ist als bei einer zweiten meteorologischen Bedingung, kann der ersten meteorologischen Bedingung ein geringeres augenblickliches Tarifdatum als der zweiten (sich von der ersten meteorologischen Bedingung unterscheidenden) Bedingung zugeordnet werden. Auch das meteorologische Kriterium kann in Tabellenform vorliegen. Eine beispielhafte Tabelle ist die nachfolgende Tabelle 3.

**Tabelle 3**

| **Meteorologische Bedingung** | **Augenblickliches Tarifdatum (in % abhängig vom fest vorgegebenen Tarifdatum TD_{F})** |
|---|---|
| Erste Bedingung (z.B. Temperatur zwischen 10 und 20°C; Niederschlagswahrscheinlichkeit zwischen 0 % und 20 %, Niederschlagsart: Regen) | -15 % |
| Zweite Bedingung (z.B. Temperatur zwischen -5 und 5°C; Niederschlagswahrscheinlichkeit zwischen 0 % und 20 % Niederschlagsart: Schnee, Schneeregen) | +2% |
| Dritte Bedingung (z.B. Temperatur zwischen 20 und 30°C; Niederschlagswahrscheinlichkeit zwischen 70 % und 100 %, Niederschlagsart: Regen, Gewitter etc.) | + 5% |

Es versteht sich, dass eine Tabelle lediglich ein Beispiel ist (z.B. kann das Kriterium in Form einer mathematischen Funktion vorliegen) und/oder andere Einträge (beispielsweise absolute Beträge, insbesondere eine Vielzahl an Bedingungen) umfassen kann.

Das dynamische Tarifbestimmungsmodul kann eingerichtet sein, bei Erhalt einer Nutzungsanfrage eine bereitgestellte (prognostizierte und/oder gemessene) meteorologische Bedingung für die angefragte Fahrtangabe (also während der Inanspruchnahme und für den Inanspruchnahmeort) abzufragen. Dann kann abhängig von dieser meteorologischen Bedingung und dem meteorologischen Kriterium (z.B. die meteorologische Bedingungstabelle) das augenblickliche Tarifdatum bestimmt werden.

Mit Blick auf die Tabelle 3 bestimmt das dynamische Tarifbestimmungsmodul bei einer ersten meteorologischen Bedingung ein augenblickliches Tarifdatum TD_{A} = 0,85 ^{∗} TD_{F}, bei einer zweiten meteorologischen Bedingung ein augenblickliches Tarifdatum TD_{A} = 1,02 ^{∗} TD_{F} und beispielsweise bei einer dritten meteorologischen Bedingung ein augenblickliches Tarifdatum TD_{A} = 1,05 ^{∗} TD_{F}.

Gemäß einer weiteren Ausführungsform des anmeldungsgemäßen Hintergrundsystems kann das mindestens eine Tarifkriterium mindestens ein Ereigniskriterium sein. Ein während (oder auch kurz davor oder danach) des Zeitraums der angefragten Fahrt stattfindendes Ereignis kann einen Einfluss auf die Auslastung eines Transportfahrzeugs haben.

Beispielsweise kann vorab bestimmt werden, wie sich bestimmte lokale und/oder globale Ereignisse (z.B. lokales Fußballbundesligaspiel, globales (also entfernt von dem Standort des Transportsystems stattfindendes) Fußballweltmeisterschaftsspiel, lokale Demonstration, lokale Messe etc.) auf die Auslastung von Transportfahrzeugen auswirken.

Wenn beispielsweise festgestellt wird, dass bei einem ersten Ereignis eine Auslastung eines Transportfahrzeugs geringer ist als bei einem zweiten Ereignis, kann dem ersten Ereignis ein geringeres augenblickliches Tarifdatum als dem zweiten (sich von dem ersten Ereignis unterscheidenden) Ereignis zugeordnet werden. Auch das Ereigniskriterium kann in Tabellenform vorliegen. Eine beispielhafte Tabelle ist die nachfolgende Tabelle 4.

**Tabelle 4**

| **Ereignisbedingung** | **Augenblickliches Tarifdatum (in % abhängig vom fest vorgegebenen Tarifdatum TD_{F}** |
|---|---|
| Erstes Ereignis | -10 % |
| Zweites Ereignis | 0 |
| Drittes Ereignis | + 2 % |

Es versteht sich, dass eine Tabelle lediglich ein Beispiel ist (z.B. kann das Kriterium in Form einer mathematischen Funktion vorliegen) und/oder andere Einträge (beispielsweise absolute Beträge, weitere Ereignisse) umfassen kann.

Das dynamische Tarifbestimmungsmodul kann eingerichtet sein, bei Erhalt einer Nutzungsanfrage Ereignisse abzufragen, die in dem Zeitraum der angefragten Fahrtangabe liegen. Dann kann abhängig von dem bestimmten Ereignis und dem Ereigniskriterium (z.B. eine Ereignisstabelle) das augenblickliche Tarifdatum bestimmt werden.

Mit Blick auf die Tabelle 4 bestimmt das dynamische Tarifbestimmungsmodul bei einem ersten Ereignis ein augenblickliches Tarifdatum TD_{A} = 0,9 ^{∗} TD_{F}, bei einem zweiten Ereignis ein augenblickliches Tarifdatum TD_{A} = TD_{F} und beispielsweise bei einem dritten Ereignis ein augenblickliches Tarifdatum TD_{A} = 1,02 ^{∗} TD_{F}.

Vorzugsweise können zumindest zwei der vorgenannten Tarifkriterien vorgegeben sein und insbesondere in einem bestimmten funktionalen Zusammenhang zueinander stehen. Die Bestimmung des augenblicklichen Tarifdatums durch das dynamische Tarifbestimmungsmodul kann erfolgen, basierend auf zwei oder mehr Tarifkriterien und entsprechend dem vorgegebenen funktionalen (z.B. gewichteten) Zusammenhang zwischen diesen Kriterien. Die Auslastungssteuerung kann noch weiter verbessert werden.

Gemäß einer weiteren Ausführungsform des anmeldungsgemäßen Hintergrundsystems kann das Hintergrundsystem ferner umfassen:
- mindestens ein Sperrprüfmodul, eingerichtet zum Prüfen, ob ein für die durchgeführte Fahrt zu entrichtender Betrag innerhalb einer bestimmten Zeitdauer entrichtet wurde, und
- mindestens ein Sperrmodul, eingerichtet zum Aussenden einer Sperrnachricht an die mindestens eine Validatorvorrichtung, derart, dass die Verwendung des Ticketmediums an der mindestens einen Validatorvorrichtung gesperrt wird.

Um insbesondere weitere Fahrten zu unterbinden oder zumindest zu erschweren, wenn der Nutzer den für die durchgeführte Fahrt zu entrichtenden Betrag nicht innerhalb einer bestimmten Zeitdauer entrichtet hat oder das Ticketmedium aus anderen Gründen (z.B. Überziehung eines Kreditlimits) nicht (mehr) zulässig ist, kann eine Sperrnachricht an vorzugsweise sämtliche Validatorvorrichtungen des Transportsystems gesendet werden. Die Sperrnachricht kann zumindest die zu sperrende Mediumkennung bzw. Mediumkennungsreferenz enthalten. Diese kann in einem lokalen Datenspeicher der mindestens einen Validatorvorrichtung gespeichert werden.

Vor einer Freigabe eines Zugangs, beispielsweise durch eine Durchgangssperre, zu einem zahlungspflichtigen Raum kann beispielsweise eine Überprüfung der erfassten Mediumkennung erfolgen, beispielsweise durch eine Vergleichsoperation. Wird festgestellt, dass diese zu einer gespeicherten (unzulässigen) Mediumkennungsreferenz korrespondiert, kann der Zugang gesperrt bleiben. Auch kann an einer Anzeigeneinrichtung der Validatorvorrichtung angezeigt werden, dass die (gewünschte) Fahrt mit dem verwendeten Ticketmedium nicht durchgeführt werden darf. Dann können weitere Maßnahmen eingeleitet werden.

Ein weiterer Aspekt der Anmeldung ist ein Open-Loop Transportsystem, umfassend:
- mindestens ein zuvor beschriebenes Hintergrundsystem, und
- mindestens eine (zuvor beschriebene) Validatorvorrichtung, eingerichtet zum Erfassen eines elektronischen Startdatensatzes und/oder Enddatensatzes eines Ticketmediums, welches für eine Fahrt verwendet wird.

Erfassen eines elektronischen Startdatensatzes und/oder Enddatensatzes umfasst insbesondere das Erfassen einer elektronischen Mediumkennung bzw. Mediumkennungsreferenz und mindestens eines Transportinformationsdatums, insbesondere in Form des Erfassungszeitpunkts (und/oder des Erfassungsorts). Wie beschrieben, kann ein Startdatensatz und/oder Enddatensatz an das Hintergrundsystem übertragen werden, insbesondere unmittelbar nach der Erfassung.

Gemäß einer bevorzugten Ausführungsform des anmeldungsgemäßen Transportsystems kann das Transportsystem ferner umfassen:
- mindestens eine auf einem (mobilen) Nutzerendgerät installierbare Dienstleistungsanwendung,
- wobei die Dienstleistungsanwendung mindestens ein Anfragemodul aufweist, eingerichtet zum Bewirken eines Aussendens einer Nutzungsanfrage, enthaltend zumindest eine angefragte Fahrtangabe, und/oder
- wobei die Dienstleistungsanwendung mindestens ein Empfangsmodul aufweist, eingerichtet zum Empfangen eines für die angefragte Fahrtangabe bestimmten augenblicklichen Tarifdatums, und/oder
- wobei die Dienstleistungsanwendung mindestens Bestätigungsmodul aufweist, eingerichtet zum Bewirken eines Aussendens einer Nutzungsbestätigung, enthaltend zumindest einen Bestätigungsdatensatz.

Die Dienstleistungsanwendung ist insbesondere eine auf einem (mobilen) Nutzerendgerät installierbare und von einem Prozessor des Nutzerendgeräts ausführbare Softwareanwendung. Das Transportsystem kann mindestens ein (mobiles) Nutzerendgerät mit einer Dienstleistungsanwendung umfassen.

Die Dienstleistungsanwendung in Form eines Computerprogramms, insbesondere die Instruktionen bzw. Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein (mobiles) Nutzerendgerät einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor des Nutzerendgeräts kann beispielsweise Zwischenergebnisse oder Ähnliches in dem Hauptspeicher speichern.

Zur Interaktion mit dem Hintergrundsystem (über ein Kommunikationsnetzwerk) kann die Dienstleistungsanwendung über mindestens ein (Software-) Modul verfügen.

Ein Anfragemodul ist eingerichtet, eine Übertragung einer zuvor beschrieben Nutzungsanfrage an das Hintergrundsystem zu bewirken. Ein Empfangsmodul ist eingerichtet, ein ausgegebenes augenblickliches Tarifdatum zu empfangen. Ein Bestätigungsmodul ist eingerichtet, eine Übertragung einer zuvor beschrieben Nutzungsbestätigung an das Hintergrundsystem zu bewirken. Über eine Nutzerschnittstelle des Nutzerendgeräts kann eine Interaktion zwischen Nutzer und Dienstleistungsanwendung erfolgen.

Ein noch weiterer Aspekt der Anmeldung ist ein Verfahren zum Betreiben eines (zuvor beschriebenen) Open-Loop Transportsystems, umfassend mindestens ein Hintergrundsystem, insbesondere ein zuvor beschriebenes Hintergrundsystems (nach einem der vorherigen Ansprüche), dadurch gekennzeichnet, dass das Verfahren umfasst:
- Bestimmen, durch ein dynamisches Tarifbestimmungsmodul des Hintergrundsystems, eines augenblicklichen Tarifdatums, basierend auf einer angefragten Fahrtangabe und mindestens einem Tarifkriterium,
- Ausgeben, durch mindestens ein Ausgabemodul des Hintergrundsystems, eines für die angefragte Fahrtangabe bestimmten augenblicklichen Tarifdatums,
- bei Erhalt eines Bestätigungsdatensatzes als Antwort auf das für die angefragte Fahrtangabe ausgegebene augenblickliche Tarifdatum: Speichern, durch mindestens ein Speichermodul des Hintergrundsystems, eines Fahrtdatensatzes, enthaltend das ausgegebene augenblickliche Tarifdatum, die angefragte Fahrtangabe und eine Mediumkennungsreferenz des Bestätigungsdatensatze, und
- bei einer Detektion einer Inanspruchnahme der für die Mediumkennungsreferenz gespeicherten Fahrtangabe: Abrechnen, durch ein Abrechnungsmodul des Hintergrundsystems, der angefragten Fahrtangabe, basierend auf dem gespeicherten Fahrtdatensatz.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen. Es sei ferner angemerkt, dass Begriffe, wie "erste", "zweite" etc. nicht eine Reihenfolge angeben, sondern insbesondere zur Unterscheidung zweier Elemente (z.B. Modul, Endgerät, Bedingung, Ereignis etc.) dienen.

Die Merkmale der Hintergrundsysteme, Open-Loop Transportsysteme und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Hintergrundsystem, das anmeldungsgemäße Verfahren und das anmeldungsgemäße Open Loop Transportsystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Open-Loop Transportsystems gemäß der vorliegenden Anmeldung mit einem Ausführungsbeispiel eines Hintergrundsystems gemäß der vorliegenden Anmeldung,
- Fig. 2: ein Diagramm eines Ausführungsbeispiels eines Verfahrens gemäß der vorliegenden Anmeldung, und
- Fig. 3: ein Diagramm eines weiteren Ausführungsbeispiels eines Verfahrens gemäß der vorliegenden Anmeldung.

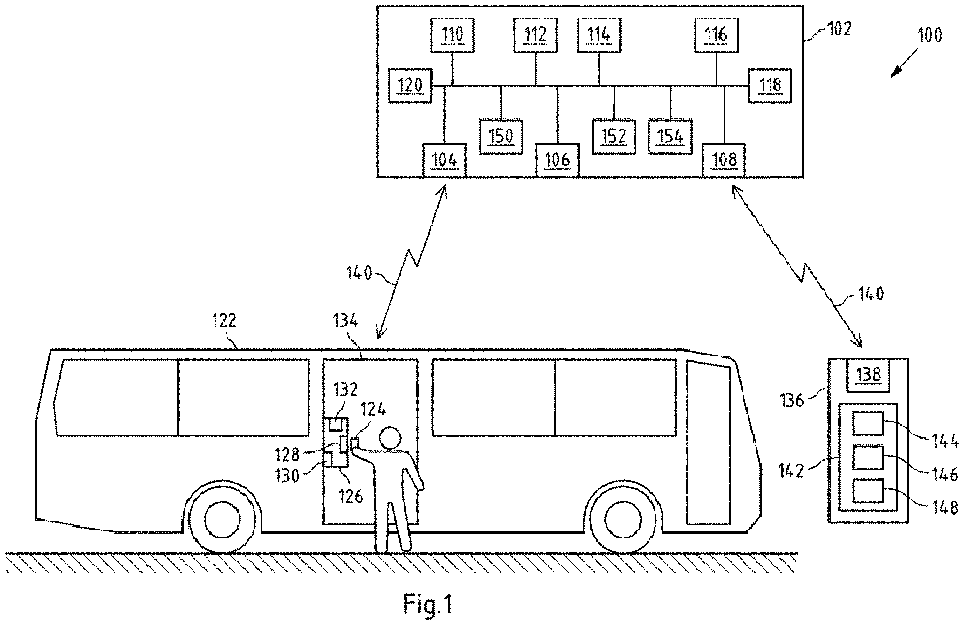

Die Figur 1 zeigt eine schematische Ansicht eines Ausführungsbeispiels eines Open-Loop Transportsystems 100 (bzw. ein Transportsystem 100 mit einem Open-Loop Ticketsystem) gemäß der vorliegenden Anmeldung mit einem Ausführungsbeispiel eines Hintergrundsystems 102 gemäß der vorliegenden Anmeldung.

Das dargestellte Transportsystem 100 umfasst mindestens ein Hintergrundsystem 102 und mindestens eine Validatorvorrichtung 126. Ferner umfasst das Transportsystem 100 mindestens ein Transportfahrzeug 122, vorliegend beispielhaft in Form eines Busses 122. Es versteht sich, dass ein Transportsystem 100 alternativ oder zusätzlich weitere und/oder andere Transportfahrzeuge (z.B. Seilbahn, Bahn, Wasserfahrzeug etc.) umfassen kann.

In dem vorliegenden Beispiel ist die mindestens eine Validatorvorrichtung 126 in dem Transportfahrzeug 122 angeordnet. Wie zu erkennen ist, ist die mindestens eine Validatorvorrichtung 126 an einem Zugang 134 (z.B. Eingang und/oder Ausgang) des Transportfahrzeugs 122 zu einem zahlungspflichtigen Raum angeordnet, vorzugsweise dem Innenraum des Transportfahrzeugs 122. Vorzugsweise kann an jedem Zugang 134 eines Transportfahrzeugs 122 mindestens eine Validatorvorrichtung 126 angeordnet sein. Bei anderen Varianten der Anmeldung kann die Validatorvorrichtung auch in einem Bahnhof oder dergleichen angeordnet sein.

Bei einem Betrieb des Transportsystems 100 kann sich ein Nutzer des Transportfahrzeugs 122 für eine berechtigte Fahrt bei einem Zustieg zu dem Transportfahrzeug 122 anmelden ("Check-In"). Hierzu kann der Nutzer sein Ticketmedium 124 insbesondere in Reichweite einer Ticketmediumschnittstelle 128 der Validatorvorrichtung 126 bringen.

Die mindestens eine Ticketmediumschnittstelle 128 kann eine kontaktbehaftete oder kontaktlose Ticketmediumschnittstelle 128 sein. Es versteht sich, dass zwei oder mehr Ticketmediumschnittstellen vorgesehen sein können, für eine entsprechende Anzahl unterschiedlicher Ticketmedien.

Insbesondere kann, durch die Ticketmediumschnittstelle 128, zumindest eine elektronische Mediumkennung des Ticketmediums 124 in dem Anmeldevorgang erfasst werden. Das Ticketmedium 124 ist vorliegend beispielhaft eine Kreditkarte 124 mit einer in einem Datenspeicher der Kreditkarte 124 gespeicherten ePAN. Diese ist über eine (kontaktbehaftete oder kontaktlose) Schnittstelle des Ticketmediums 124 erfassbar.

Es versteht sich, dass bei anderen Varianten der Anmeldung auch andere Ticketmedien alternativ oder zusätzlich verwendet werden können, wie bereits beschrieben wurde.

Die Validatorvorrichtung 126 kann mindestens ein Kommunikationsmodul 132 aufweisen und/oder mit mindestens einem (nicht gezeigten) Kommunikationsmodul der Fahrzeuginfrastruktur verbindbar sein. Das Kommunikationsmodul 132 kann zumindest eingerichtet sein, eine Mediumkennungsreferenz der erfassten elektronischen (eineindeutigen) Mediumkennung und mindestens ein Transportinformationsdatum, vorzugsweise zusammen mit weiteren Daten, an das (zentrale) Hintergrundsystem 102 des Transportsystems 100 zu übertragen. Insbesondere erfolgt ein Übertragen eines entsprechenden Datensatzes, wie ein (zuvor beschriebener) Start- oder Enddatensatz.

Das mindestens eine Transportinformationsdatum eines Start- oder Enddatensatz kann insbesondere ein Zeitstempel (z.B. Kalenderdatum und Uhrzeit des Erfassungszeitpunkts) und/oder mindestens eine Standortangabe sein, aus der der Standort der Validatorvorrichtung (bzw. des Transportfahrzeugs 122) während der Erfassung der elektronischen Mediumkennung zumindest ableitbar ist.

Optional kann die Validatorvorrichtung 126 über mindestens einen lokalen Datenspeicher 130 verfügen. In dem mindestens einen Datenspeicher 130 kann eine Liste mit gesperrten bzw. nicht berechtigten Mediumkennungsreferenzen gespeichert sein. Wenn die elektronische Mediumkennung erfasst wird, kann dazu die Mediumkennungsreferenz berechnet werden, und diese kann mit den gespeicherten und gesperrten Mediumkennungsreferenzen verglichen werden. Wenn eine Korrespondenz (insbesondere Identität) detektiert wird, kann die Fahrt verweigert werden.

Auf einer (nicht gezeigten) Anzeigeneinrichtung der Validatorvorrichtung 126 kann alternativ oder zusätzlich angezeigt werden, dass das Ticketmedium 124 nicht zur ordnungsgemäßen Nutzung des Transportfahrzeugs 122 berechtigt ist, ebenso kann die Validatorvorrichtung 126 die Verweigerung der Fahrt mit einem akustischen Signal melden.

Bei anderen Varianten der Anmeldung kann zusätzlich eine Zugangsvorrichtung (z.B. eine Durchgangssperre) vorgesehen sein. Diese kann nur dann freigegeben werden, wenn bei dem Abgleich festgestellt wird, dass die erfasste elektronische Mediumkennung keine gesperrte Mediumkennung ist.

Bei einem Verlassen des Transportfahrzeugs 122 kann sich der Nutzer abmelden, insbesondere analog zu dem vorbeschriebenen Anmeldevorgang ("Check-Out"). In entsprechender Weise kann eine Validatorvorrichtung (beispielsweise die gleiche Validatorvorrichtung 126) zumindest die Mediumkennungsreferenz und mindestens ein Transportinformationsdatum, vorzugsweise zusammen mit den weiteren genannten Daten, an das Hintergrundsystem 102 übertragen. Insbesondere erfolgt ein Übertragen eines Enddatensatzes.

Bei einer Kontrolle durch einen Kontrolleur kann der Kontrolleur mit einer (nicht gezeigten) Inspektionsvorrichtung die an das Hintergrundsystem 102 übertragenen Mediumkennungsreferenzen abrufen, insbesondere empfangen, und für die Kontrolle verwenden. Insbesondere können durch die Inspektionsvorrichtung die Ticketmedien kontrolliert werden, indem die jeweilige Mediumkennung ausgelesen wird, daraus die Mediumkennungsreferenz berechnet wird und mit den Mediumkennungsreferenzen verglichen wird, die von dem Hintergrundsystem 102 empfangen wurde. Wird hierbei festgestellt, dass sich ein Nutzer nicht angemeldet hat und/oder ein Ticketmedium mit einer gesperrten Mediumkennung besitzt, kann der Kontrolleur bekannte Maßnahmen ergreifen.

Das Hintergrundsystem 102 kann durch eine oder mehrere (ggf. verteilt) angeordnete Rechenvorrichtung/en gebildet sein. Das Hintergrundsystem 102 weist eine Mehrzahl von Modulen auf. Diese können zumindest teilweise als Softwaremodule und/oder Hardwaremodule gebildet sein.

Wie bereits beschrieben wurde, kann ein Kommunikationsmodul 132 der Validatorvorrichtung 126 mit einem Kommunikationsmodul 104 des Hintergrundsystems 102 (bevorzugt bidirektional) Daten austauschen.

Darüber hinaus umfasst das Hintergrundsystem 102 ein Ausgabemodul 106 und ein Empfangsmodul 108. Bei Varianten der Anmeldung kann auch ein gemeinsames bidirektionales Kommunikationsmodul vorgesehen sein.

Das mindestens eine Empfangsmodul 108 ist insbesondere eingerichtet zum Empfangen einer Nutzungsanfrage und/oder einer Nutzungsbestätigung von einem Nutzerendgerät 136. Die Nutzungsanfrage umfasst zumindest die angefragte Fahrtangabe. Die Nutzungsbestätigung umfasst zumindest den Bestätigungsdatensatz.

Das Ausgabemodul 106 ist zumindest eingerichtet zum Ausgeben eines für eine angefragte Fahrtangabe bestimmten augenblicklichen Tarifdatums.

Die Bestimmung des augenblicklichen Tarifdatums erfolgt durch das dynamische Tarifbestimmungsmodul 112. Das dynamische Tarifbestimmungsmodul 112 ist eingerichtet zum Bestimmen eines augenblicklichen Tarifdatums, basierend auf mindestens einem Tarifkriterium und einer angefragten Fahrtangabe. Das augenblickliche Tarifdatum unterscheidet sich hierbei von einem fest vorgegebenen Tarifdatum.

Darüber hinaus ist in dem Hintergrundsystem 102 mindestens ein Abrechnungsmodul 110 implementiert. Das Abrechnungsmodul 110 ist eingerichtet zum Abrechnen einer durchgeführten Fahrt, zumindest basierend auf einem erhaltenen Startdatensatz, einem erhaltenen Enddatensatz und einem fest vorgegebenen Tarifdatum (in herkömmlicher Weise).

Darüber hinaus ist das Abrechnungsmodul 110 anmeldungsgemäß eingerichtet zum Abrechnen der angefragten Fahrtangabe, basierend auf dem gespeicherten Fahrtdatensatz, zumindest bei einer Detektion einer Inanspruchnahme der für die Mediumkennungsreferenz gespeicherten Fahrtangabe. Bei Varianten der Anmeldung können auch zwei Abrechnungsmodule für die unterschiedlichen Abrechnungsarten vorgesehen sein.

Die Speicherung des mindestens einen Fahrtdatensatzes erfolgt durch ein Speichermodul 114. Insbesondere kann ein Fahrtdatensatz durch das Speichermodul 114 in einem Datenspeicher 116 des Hintergrundsystems 102 gespeichert werden. Der Fahrtdatensatz enthält zumindest das ausgegebene augenblickliche Tarifdatum, die angefragte Fahrtangabe (mit mindestens einem Fahrtdatum) und eine Mediumkennungsreferenz, die zu dem Ticketmedium gehört, mit dem der Nutzer die angefragte Fahrtangabe nutzen wird.

Die Speicherung erfolgt insbesondere bei Erhalt eines Bestätigungsdatensatzes als Antwort auf das für die angefragte Fahrtangabe ausgegebene augenblickliche Tarifdatum. Hierbei ist es erforderlich, dass die Antwort innerhalb einer bestimmten Gültigkeitszeitdauer empfangen wird. Die Gültigkeitszeitdauer (Startzeitpunkt ist insbesondere der Ausgabezeitpunkt des augenblicklichen Tarifdatums) gibt insbesondere an, wie lange das ausgegebene augenblickliche Tarifdatum gültig ist. Wird ein Bestätigungsdatensatz nach Ablauf der Gültigkeitszeitspanne empfangen, so erfolgt insbesondere keine Speicherung. Es kann eine Nachricht ausgesendet werden, in der informiert wird, dass keine Speicherung aufgrund des nicht mehr gültigen augenblicklichen Tarifdatums erfolgt. Vorzugsweise kann in dieser Nachricht zusätzlich ein neu bestimmtes augenblickliches Tarifdatum oder eine Aufforderung für eine weitere Nutzungsanfrage enthalten sein.

Vorzugsweise kann in dem mindestens einen Datenspeicher 116 eine Mehrzahl von Nutzerdatensätzen bzw. Nutzerkonten von registrierten Nutzern bzw. registrierten Mediumkennungsreferenzen gespeichert sein. Insbesondere kann das Abrechnungsmodul 110 auf die gespeicherten Nutzerdaten eines Nutzerkontos für die Durchführung einer Abrechnung zugreifen.

In dem vorliegenden Ausführungsbeispiel umfasst das Hintergrundsystem 102 mindestens ein Zuordnungsmodul 118 und mindestens ein Prüfungsmodul 120. Bei Varianten der Anmeldung kann ein gemeinsames Modul vorgesehen sein.

Das Zuordnungsmodul 118 ist eingerichtet zum Zuordnen eines erhaltenen Enddatensatzes zu einem gespeicherten Fahrtdatensatz, basierend auf der jeweils enthaltenen Mediumkennungsreferenz. Insbesondere nimmt das Zuordnungsmodul 118 einen entsprechenden Abgleich vor. Wird festgestellt, dass eine erhaltene Mediumkennungsreferenz eines Enddatensatzes (und/oder Startdatensatzes) zu einer in einem Fahrtdatensatz gespeicherten Mediumkennungsreferenz korrespondiert, insbesondere identisch ist, ordnet das Zuordnungsmodul 118 die entsprechenden Datensätze einander zu.

Dann überprüft das Prüfungsmodul 120, ob das mindestens eine Transportinformationsdatum des zugeordneten Enddatensatzes (und/oder Startdatensatzes) zu der gespeicherten Fahrtangabe korrespondiert. Dies meint insbesondere, dass geprüft wird, ob eine in dem Enddatensatz enthaltene oder zumindest daraus ableitbare (z.B. aus einer Validatorkennung oder dergleichen) Ortsangabe, insbesondere ein Fahrziel, zu einer in der Fahrtangabe enthaltene Ortsangabe, insbesondere einem Fahrziel, korrespondiert. Entsprechend kann der Erfassungszeitpunkt des Enddatensatzes mit dem gespeicherten Endzeitpunkt der angefragten Fahrt verglichen werden. In analoger Weise kann ein Startdatensatz geprüft werden.

Vorzugsweise kann eine Abrechnung mit dem gespeicherten augenblicklichen Tarifdatum durch das Abrechnungsmodul 110 nur dann erfolgen, wenn die genannten Daten zueinander korrespondieren.

Optional weist das Hintergrundsystem 102 darüber hinaus ein Auslastungsbestimmungsmodul 150, ein Sperrprüfmodul 152 und/oder ein Sperrmodul 154 auf. Das Auslastungsbestimmungsmodul 150 kann eingerichtet sein zum Bestimmen der prognostizierten und/oder IST-Auslastung eines Transportfahrzeugs 122.

Beispielsweise kann in dem Hintergrundsystem 102 in dem mindestens einen Datenspeicher 116 eine Datenbank mit historischen Auslastungsdaten von Transportfahrzeugen vorhanden sein. Basierend auf den historischen Auslastungsdaten kann das Auslastungsbestimmungsmodul 150 die Auslastung eines Transportfahrzeugs 122 bestimmen. Hierbei kann eine KI (künstliche Intelligenz) Technologie zum Einsatz kommen.

Alternativ oder zusätzlich kann das Auslastungsbestimmungsmodul 150 vorzugsweise eingerichtet sein zum Bestimmen der Auslastung eines Transportfahrzeugs 122, basierend auf den für dieses Transportfahrzeug 122 tatsächlich vorliegenden Startdatensätzen, also von Nutzern vorgenommenen tatsächlichen Anmeldungen. Dem Auslastungsbestimmungsmodul 150 kann die Transportkapazität des Transportfahrzeugs 122 bekannt sein (insbesondere aus einer entsprechenden Datenbank des Hintergrundsystems 102).

Vorzugsweise zusätzlich kann das Bestimmen der Auslastung des Transportfahrzeugs 122 auf den für dieses Transportfahrzeug 122 tatsächlich vorliegenden gespeicherten Fahrtdatensätzen basieren.

Das Sperrprüfmodul 152 kann eingerichtet sein zum Prüfen, ob ein für die durchgeführte Fahrt zu entrichtender Betrag innerhalb einer bestimmten Zeitdauer entrichtet wurde. Alternativ oder zusätzlich kann durch das Sperrprüfmodul 152 geprüft werden, beispielsweise durch eine Kommunikation mit einem Zahlungsdienstleister des Ticketmediums 124, ob der Kontostand des Kontos, das der Mediumkennungsreferenz zugeordnet ist, ein bestimmtes Kreditkriterium (z.B. ein bestimmter Betrag) erfüllt. Wird festgestellt, dass dies nicht der Fall ist oder der Betrag nicht innerhalb einer bestimmten Zeitdauer entrichtet wurde, kann ein Sperrmodul 154 ein Aussenden einer Sperrnachricht an die mindestens eine Validatorvorrichtung 126 bewirken, derart, dass die Verwendung des Ticketmediums 124 an der mindestens einen Validatorvorrichtung 126 gesperrt wird. Ansonsten bleibt die Verwendung erlaubt.

Ferner umfasst das Transportsystem 100 vorliegend ein Nutzerendgerät 136 in Form eines mobilen Endgeräts 136 mit einem Kommunikationsmodul 138. Das Kommunikationsmodul 138 ist zumindest eingerichtet zum Kommunizieren mit dem Ausgabemodul 106 und dem Empfangsmodul 108.

Vorliegend ist auf dem mobilen Endgerät 136 (z.B. ein Smartphone) eine Dienstleistungsanwendung 142 installiert. Die Dienstleistungsanwendung 142 weist im dargestellten Beispiel mindestens ein Anfragemodul 144 auf, eingerichtet zum Bewirken eines Aussendens der beschriebenen Nutzungsanfrage, enthaltend zumindest die angefragte Fahrtangabe. Zudem weist die Dienstleistungsanwendung 142 mindestens ein Empfangsmodul 146 auf, eingerichtet zum Empfangen des beschriebenen augenblicklichen Tarifdatums. Vorliegend ist zudem mindestens Bestätigungsmodul 148 vorgesehen, das eingerichtet ist zum Bewirken eines Aussendens der Nutzungsbestätigung, enthaltend zumindest einen Bestätigungsdatensatz.

Über eine Nutzerschnittstelle (z.B. Touchdisplay oder dergleichen) kann der Nutzer mit der Dienstleistungsanwendung 142 interagieren, beispielsweise ein augenblickliches Tarifdatum für eine bestimmte und durch die Dienstleistungsanwendung 142 spezifizierbare Fahrt erfragen. Das ausgegebene und durch die Dienstleistungsanwendung 142 erhaltene augenblickliche Tarifdatum kann dem Nutzer über ein Display des mobilen Endgeräts 136 angezeigt werden, derart, dass dieser die Annahme des angezeigten augenblicklichen Tarifdatums durch eine Nutzeraktion bestätigen kann. Bei Detektion einer entsprechenden Nutzeraktion bewirkt das Bestätigungsmodul 148 insbesondere das Aussenden einer entsprechenden Nutzungsbestätigung bzw. des Bestätigungsdatensatzes.

Wie ferner zu erkennen ist, kann mindestens ein (drahtloses und/oder drahtgebundenes) Kommunikationsnetz 140 vorgesehen sein, um eine Kommunikation zumindest zwischen den dargestellten Elementen 102, 126, 136 zu ermöglichen.

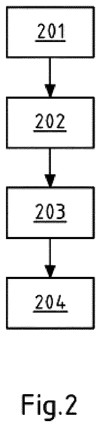

Die Funktionsweise des Open-Loop Transportsystems 100 nach Figur 1 wird nachfolgend näher mit Hilfe der Figur 2 beschrieben. Die Figur 2 zeigt ein Diagramm eines Ausführungsbeispiels eines Verfahrens gemäß der vorliegenden Anmeldung.

In einem Schritt 201 erfolgt ein Bestimmen, durch das dynamische Tarifbestimmungsmodul 112 des Hintergrundsystems 102, eines augenblicklichen Tarifdatums, basierend auf einer angefragten Fahrtangabe und mindestens einem Tarifkriterium. Das Tarifkriterium ist insbesondere ein Zeitdifferenzkriterium (vgl. z.B. Tabelle 1) und/oder ein Transportauslastungskriterium (vgl. z.B. Tabelle 2) und/oder ein meteorologisches Kriterium (vgl. z.B. Tabelle 3) und/oder ein Ereigniskriterium (vgl. z.B. Tabelle 4), wie zuvor beschrieben wurde.

Abhängig von dem mindestens einen Tarifkriterium und der angefragten Fahrtangabe, also insbesondere einem angefragten Startzeitpunkt, Endzeitpunkt, Startort und Zielort der angefragten Fahrt, wird ein augenblickliches Tarifdatum bestimmt, wie zuvor beschrieben wurde.

Insbesondere kann in einem vorherigen Schritt eine Nutzungsanfrage durch das Hintergrundsystem 102 empfangen werden. Wie bereits beschrieben wurde, kann das Anfragemodul 144 einer Dienstleistungsanwendung 142 ein Aussenden durch das Kommunikationsmodul 138 des mobilen Endgeräts 136 bewirken. Bei anderen Varianten der Anmeldung kann auch ein Webinterface vorgesehen sein, über das dem dynamischen Tarifbestimmungsmodul 112 eine Nutzungsanfrage gestellt werden kann.

In einem Schritt 202 erfolgt ein Ausgeben, durch das Ausgabemodul 108 des Hintergrundsystems 102, des für die angefragte Fahrtangabe bestimmten augenblicklichen Tarifdatums. Beispielsweise kann eine entsprechende Mitteilung an das Kommunikationsmodul 138 gesandt werden und z.B. durch die Dienstleistungsanwendung 142 auf einem Bildschirm des mobilen Endgeräts 136 zur Anzeige gebracht werden. Bei anderen Varianten der Anmeldung kann das Webinterface das augenblickliche Tarifdatum ausgeben, insbesondere zur Anzeige bringen.

Darüber hinaus erfolgt in Schritt 203 ein Speichern, durch das Speichermodul 114 des Hintergrundsystems 102, eines Dienstleistungsdatensatzes, enthaltend das ausgegebene augenblickliche Tarifdatum, die angefragte Fahrtangabe und eine Mediumkennungsreferenz (die beispielsweise in der Nutzungsanfrage oder dem Bestätigungsdatensatz enthalten sein kann oder aus einem Nutzerkonto (z.B. basierend auf einer Nutzerkennung) bestimmt werden kann).

Das Speichern erfolgt zumindest bei Erhalt eines Bestätigungsdatensatzes als Antwort auf das für die angefragte Fahrtangabe ausgegebene augenblickliche Tarifdatum, wie zuvor beschrieben wurde. Es versteht sich, dass auch bereits bei bzw. nach einer Ausgabe des augenblicklichen Tarifdatums eine Speicherung eines Teils dieser Daten erfolgen kann und dass bei Ausbleiben eines Bestätigungsdatensatzes innerhalb der Gültigkeitszeitdauer diese Daten wieder gelöscht werden können. Ein Speichern eines Fahrtdatensatz meint insbesondere, dass dieser durch einen Bestätigungssatz zuvor bestätigt wurde.

Es versteht sich ferner, dass der Schritt 202 mehrmals durchgeführt werden kann, bis der Nutzer ein ausgegebenes augenblickliches Tarifdatum akzeptiert (oder endgültig ablehnt). Für eine angefragte Fahrt kann ein Nutzer also periodisch wiederholend aktualisierte Fahrpreise erhalten, bis er die Fahrt wählt (also ein ausgegebenes augenblickliches Tarifdatum akzeptiert) oder die angefragte Fahrt verwirft.

In dem nächsten Schritt 204 erfolgt ein Abrechnen, durch das Abrechnungsmodul 110 des Hintergrundsystems 102, der angefragten Fahrtangabe, basierend auf dem gespeicherten Fahrtdatensatz. Die Abrechnung erfolgt zumindest immer dann, wenn eine tatsächliche Inanspruchnahme der für die Mediumkennungsreferenz gespeicherten Fahrtangabe detektiert wird.

Eine Detektion erfolgt insbesondere durch Erhalten und Auswerten eines Enddatensatzes, der eine zu der gespeicherten Mediumkennungsreferenz korrespondierende (insbesondere identische) Mediumkennungsreferenz und vorzugsweise ein zu der gespeicherten Fahrtangabe korrespondierendes Transportinformationsdatum enthält, wie zuvor beschrieben wurde.

Vorzugsweise kann der Bestätigungsdatensatz den Startdatensatz ersetzt. Bei Varianten der Anmeldung kann es für eine Abrechnung mit dem augenblicklichen Tarifdatum zusätzlich erforderlich sein, dass auch ein Startdatensatz empfangen wird, der eine zu der gespeicherten Mediumkennungsreferenz korrespondierende (insbesondere identische) Mediumkennungsreferenz und vorzugsweise ein zu der gespeicherten Fahrtangabe korrespondierendes Transportinformationsdatum enthält.

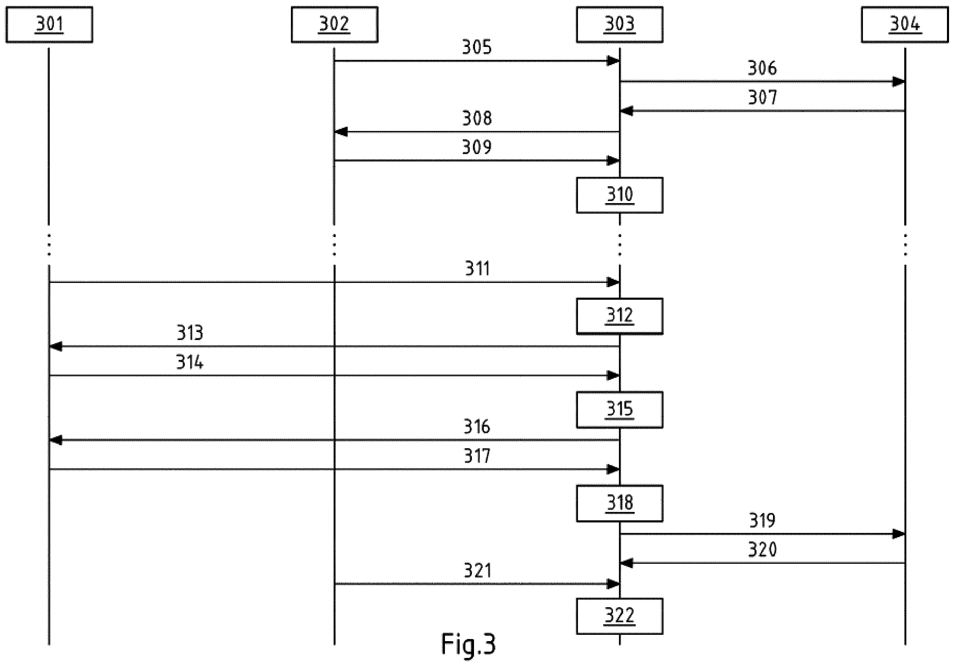

Die Figur 3 zeigt ein Diagramm eines weiteren Ausführungsbeispiels eines Verfahrens gemäß der vorliegenden Anmeldung. Hierbei ist mit dem Bezugszeichen 301 die Dienstleistungsanwendung bzw. das mobile Endgerät bezeichnet, auf dem die Dienstleistungsanwendung installiert ist. Bezugszeichen 302 bezeichnet die Validatorvorrichtung, Bezugszeichen 303 das Hintergrundsystem und das Bezugszeichen 304 ein Serversystem eines Zahlungsdienstleisters (insbesondere der Anbieter des Ticketmediums, beispielsweise eine Kreditkarte).

Zunächst ist in der Figur 3 eine beispielhafte herkömmliche Nutzung des anmeldungsgemäßen Open-Loop Transportsystems dargestellt. Das Open-Loop Transportsystem kann beispielsweise entsprechend Figur 1 gebildet sein.

Nach einer Anmeldung eines Nutzers an einer Validatorvorrichtung 302, also insbesondere nach einem Erfassen der elektronischen Mediumkennung durch die Validatorvorrichtung 302, übermittelt die Validatorvorrichtung 302 einen Startdatensatz in Schritt 305 an das Hintergrundsystem 303. Der Startdatensatz enthält insbesondere die Mediumkennungsreferenz der erfassten elektronischen Mediumkennung, einen Zeitstempel der Erfassung der elektronischen Mediumkennung durch die Validatorvorrichtung 302 und eine Ortsangabe (z.B. geographische Koordinaten, Validatorkennung etc.). Dieser Datensatz kann in dem Hintergrundsystem 303 gespeichert werden.

Optional kann das Hintergrundsystem 303 in Schritt 306 bei dem Zahlungsdienstleister 304 anfragen, ob das der erhaltenen Mediumkennungsreferenz zugeordnete Konto mindestens ein bestimmtes Kreditkriterium (z.B. ein Kreditlimit) erfüllt, wie zuvor beschrieben wurde.

Nach einer Prüfung durch den Zahlungsdienstleister 304 sendet dieser die Antwort (Kriterium erfüllt oder nicht) in Schritt 307 an das Hintergrundsystem 303 zurück. Ist das Kriterium nicht erfüllt, kann eine Sperrnachricht in Schritt 308 an die mindestens eine Validatorvorrichtung 302 gesendet werden, um insbesondere das Ticketmedium für die Verwendung in dem Transportsystem zu sperren. Wenn das Kriterium erfüllt ist, unterbleibt dieser Schritt.

Nach einer Abmeldung des Nutzers an einer (weiteren) Validatorvorrichtung 302, also insbesondere nach einem Erfassen der elektronischen Mediumkennung durch die Validatorvorrichtung 302, übermittelt die Validatorvorrichtung 302 einen Enddatensatz an das Hintergrundsystem 303 in Schritt 309. Der Enddatensatz enthält insbesondere die Mediumkennungsreferenz der erfassten elektronischen Mediumkennung, einen Zeitstempel der Erfassung der elektronischen Mediumkennung durch die Validatorvorrichtung 302 (die sich on der vorherigen Validatorvorrichtung unterscheiden kann) und eine Ortsangabe (z.B. geographische Koordinaten, Validatorkennung etc.).

In Schritt 310 erfolgt (insbesondere am Tagesende) eine Abrechnung, durch das Abrechnungsmodul, der mindestens einen vom Nutzer durchgeführten Fahrt. Abhängig von der Mediumkennungsreferenz können die jeweils zueinander gehörenden Start- und Enddatensätze einander zugeordnet werden. Anschließend kann anhand der Zeit- und/oder Ortsangaben dieser Datensätze sowie einem fest vorgegebenen (unveränderlichen) Tarifdatum ein Abrechnungsdatensatz erstellt werden. Dieser kann an den Nutzer ausgegebenen werden.

Nachfolgend wird das anmeldungsgemäße Verfahren näher beschrieben, bei dem bei dem Open-Loop Transportsystem ein dynamisches "Pricing" erfolgt.

Beispielsweise nach Start einer Dienstleistungsanwendung 301 auf einem Nutzerendgerät (oder nach einem Aufruf eines Webinterfaces des Hintergrundsystems 303 durch das Nutzerendgerät) wird eine Nutzungsanfrage in Schritt 311 an das Hintergrundsystem 303 übermittelt. Die Nutzungsanfrage enthält zumindest eine angefragte Fahrtangabe, also insbesondere einen Startzeitpunkt, Endzeitpunkt, Startort und Zielort der angefragten Fahrt. Es versteht sich, dass weitere oder andere Fahrtdaten und/oder weitere oder andere Daten (z.B. Nutzerkennung, Mediumkennungsreferenz, Kennung der Fahrt und/oder eines Transportfahrzeugs etc.) enthalten sein können. Es versteht sich weiter, dass die Dienstleistungsanwendung 301 vom Hintergrundsystem 303 Fahrplandaten abrufen kann (nicht gezeigt in Abbildung 3), um daraus eine Nutzungsanfrage zu generieren,

In Schritt 312 bestimmt das dynamische Tarifbestimmungsmodul des Hintergrundsystems 303 ein augenblickliches Tarifdatum, insbesondere basierend auf dem Dateninhalt der erhaltenen Nutzungsanfrage und mindestens einem Tarifkriterium (vgl. z.B. die Ausführungen zu den Tabellen 1, 2, 3 und/oder 4).

In Schritt 313 wird das bestimmte augenblickliche Tarifdatum durch eine Übermittlung an das anfragende Nutzerendgerät bzw. die anfragende Dienstleistungsanwendung 301 ausgegeben. Gleichzeitig kann ein Timer gestartet werden. So ist das bestimmte augenblickliche Tarifdatum nur für eine bestimmte Gültigkeitszeitdauer gültig. Nach Ablauf dieser Zeitdauer, also nach Ablauf des Timers, ist das augenblickliche Tarifdatum ungültig. Beispielsweise kann dann eine erneute Nutzungsanfrage gesendet werden, um eine erneute Bestimmung zu veranlassen.

Wenn der Nutzer mit dem erhaltenen augenblicklichen Tarifdatum nicht einverstanden ist, kann dieser (z.B. nach einer bestimmten Zeitdauer) eine erneute Nutzungsanfrage stellen (Schritt 314). Dann kann erneut, wie zuvor beschrieben wurde, ein augenblickliches Tarifdatum bestimmt werden (Schritt 315).

Dies kann sich gegenüber dem vorherigen augenblicklichen Tarifdatum unterscheiden, beispielsweise aufgrund einer durch ein Auslastungsbestimmungsmodul bestimmten geänderten Auslastung und/oder einer sich geänderten prognostizierten meteorologischen Bedingung und/oder aufgrund eines geänderten Fahrtdatums der angefragten Fahrtangabe (z.B. andere Zeitangaben).

In Schritt 316 erfolgt ein Ausgeben des bestimmten augenblicklichen Tarifdatums in analoger Weise zu Schritt 313.

Auch kann die Dienstleistungsanwendung 301 so eingestellt sein, dass sie periodisch selbsttätig eine neue Nutzungsanfrage mit gleicher Fahrtangabe stellt (Schritt 314) wie zuvor, so dass für eine vom Nutzer eingestellte Nutzungsanfrage periodisch wiederholt ein neues augenblickliches Tarifdatum bestimmt (Schritt 315) und an die Dienstleistungsanwendung 301 ausgibt (Schritt 316), bis der Nutzer das erhaltene augenblickliche Tarifdatum akzeptiert oder die Anfrage verwirft. Alternativ kann das Hintergrundsystem 303 so konfiguriert sein, dass es selbsttätig periodisch wiederholt ein neues augenblickliches Tarifdatum bestimmt (Schritt 315) und an die Dienstleistungsanwendung 301 ausgibt (Schritt 316), bis der Nutzer das erhaltene augenblickliche Tarifdatum akzeptiert oder die Anfrage verwirft.

Wenn der Nutzer das erhaltene augenblickliche Tarifdatum akzeptiert, kann er es durch eine Nutzeraktion bestätigen. Bei einer Detektion einer entsprechenden Nutzeraktion bewirkt die Dienstleistungsanwendung 301 eine Übermittlung eines Bestätigungsdatensatzes (Schritt 317), der zumindest angibt, dass das ausgegebene augenblickliche Tarifdatum für die angefragte Fahrtangabe akzeptiert wird. Es versteht sich, dass weitere oder andere Daten (z.B. Nutzerkennung, Mediumkennungsreferenz etc.) enthalten sein können.

Unter der Annahme, dass die Gültigkeitszeitdauer noch nicht abgelaufen ist, erfolgt in Schritt 318, durch das Hintergrundsystem 303, ein Speichern eines Fahrtdatensatzes, enthaltend zumindest die angefragte Fahrtangabe, die Mediumkennungsreferenz (mit der die angefragte Fahrtangabe in Anspruch genommen werden soll) und das bestätigte augenblickliche Tarifdatum.

Optional kann das Hintergrundsystem 303 eine Autorisierungsanfrage über das gespeicherte augenblickliche Tarifdatum an das Serversystem 304 übermitteln (Schritt 319), um eine Zahlungsautorisierung des für die Inanspruchnahme entsprechend dem augenblicklichen Tarifdatums fällig werdenden Betrags zu bewirken. Dies kann insbesondere dann erfolgen, wenn ein bestimmter Grenzbetrag (z.B. 50 €) überschritten ist.

Nach einer Zahlungsautorisierung übermittelt das Serversystem 304 eine entsprechende Bestätigung an das Hintergrundsystem 303 in Schritt 320. Es versteht sich, dass eine Autorisierungsanfrage auch vor dem Speichern des entsprechenden Fahrtdatensatzes erfolgen kann. Insbesondere versteht es sich, dass der Vorgang abgebrochen werden kann, wenn eine Autorisierung fehlschlägt.

Vorzugsweise ersetzt im vorliegenden Ausführungsbeispiel der Bestätigungsdatensatz den Startdatensatz. Bei anderen Varianten der Anmeldung kann zusätzlich auch ein Startdatensatz berücksichtigt und insbesondere eine entsprechende Anmeldung ("Check-In") an einer Validatorvorrichtung erfasst und ausgewertet werden.

In Schritt 321 übermittelt die Validatorvorrichtung 302 nach einer Abmeldung ("Check-Out") des Nutzers an der Validatorvorrichtung 302, also insbesondere nach einem Erfassen der elektronischen Mediumkennung durch die Validatorvorrichtung 302, einen Enddatensatz an das Hintergrundsystem 303. Der Enddatensatz enthält insbesondere die Mediumkennungsreferenz der erfassten elektronischen Mediumkennung, einen Zeitstempel der Erfassung der elektronischen Mediumkennung durch die Validatorvorrichtung 302 (die sich on der vorherigen Validatorvorrichtung unterscheiden kann) und eine Ortsangabe der Validatorvorrichtung 302 (z.B. geographische Koordinaten, Validatorkennung etc.).

In Schritt 322 erfolgt insbesondere zunächst eine Zuordnung des erhaltenen Enddatensatzes zu einem gespeicherten Fahrtdatensatz anhand der Mediumkennungsreferenz. Nach einer Überprüfung anhand der erhaltenen und gespeicherten Daten durch ein Prüfungsmodul, ob die Fahrt wie angefragt durch den Nutzer durchgeführt wurde, erfolgt bei einem positiven Prüfungsergebnis, also bei Feststellung, dass die Fahrt wie angefragt durch den Nutzer durchgeführt wurde, eine Abrechnung. Das Abrechnungsmodul des Hintergrundsystems 303 führt insbesondere eine Abrechnung der angefragten Fahrtangabe durch, basierend auf dem gespeicherten Fahrtdatensatz, also insbesondere des gespeicherten augenblicklichen Tarifdatums.

Wenn bei der Prüfung eine Abweichung festgestellt wird (beispielsweise beim Zielort und/oder Endzeit), kann eine Abrechnung nach mindestens einer bestimmten Regel erfolgen. Beispielsweise kann die Regel angeben, dass dann nach dem fest vorgegebenen Tarifdatum abzurechnen ist.

Es versteht sich, dass einige der beschriebenen Schritte auch in einer anderen Reihenfolge oder zumindest teilweise parallel durchgeführt werden können.

Grundsätzlich kann das anmeldungsgemäße dynamische "Pricing" Verfahren auch bei einem Transportsystem angewendet werden, bei dem ein zahlungspflichtiger Raum keine Validatorvorrichtung umfasst, sondern eine Feststellung, ob sich ein Nutzer innerhalb eines zahlungspflichtigen Raums (ausschließlich) durch das mobile Endgerät (bzw. dessen Sensoren (GPS-Sensor, Bluetooth-Sensor, Beschleunigungssensor etc.)) erfolgt.

## Patentansprüche

1. Hintergrundsystem (102, 303) eines Open-Loop Transportsystems (100), umfassend:
- mindestens ein Abrechnungsmodul (110), eingerichtet zum Abrechnen einer durchgeführten Fahrt, zumindest basierend auf einem erhaltenen Startdatensatz, einem erhaltenen Enddatensatz und einem fest vorgegebenen Tarifdatum,
- wobei der Startdatensatz und der Enddatensatz jeweils die gleiche Mediumkennungsreferenz, bestimmt aus der durch mindestens eine Validatorvorrichtung (126, 302) des Transportsystems (100) erfassten elektronischen Mediumkennung eines Ticketmediums (124), und mindestens ein Transportinformationsdatum enthalten,
**dadurch gekennzeichnet, dass** das Hintergrundsystem (102, 303) ferner umfasst:
- mindestens ein dynamisches Tarifbestimmungsmodul (112), eingerichtet zum Bestimmen eines augenblicklichen Tarifdatums, basierend auf einer angefragten Fahrtangabe und mindestens auf einem Tarifkriterium, wobei sich das augenblickliche Tarifdatum von dem fest vorgegebenen Tarifdatum unterscheidet,
- mindestens ein Ausgabemodul (106), eingerichtet zum Ausgeben eines für die angefragte Fahrtangabe bestimmten augenblicklichen Tarifdatums, und
- mindestens ein Speichermodul (114), eingerichtet zum Speichern eines Fahrtdatensatzes, enthaltend die angefragte Fahrtangabe, das ausgegebene augenblickliche Tarifdatum und eine Mediumkennungsreferenz, bei Erhalt eines Bestätigungsdatensatzes als Antwort auf das für die angefragte Fahrtangabe ausgegebene augenblickliche Tarifdatum,
- wobei das Abrechnungsmodul (110) eingerichtet ist zum Abrechnen der angefragten Fahrtangabe, basierend auf dem gespeicherten Fahrtdatensatz zumindest bei einer Detektion einer Inanspruchnahme der für die Mediumkennungsreferenz gespeicherten Fahrtangabe.

2. Hintergrundsystem (102, 303) nach Anspruch 1, **dadurch gekennzeichnet, dass**
- das mindestens eine Transportinformationsdatum ausgewählt ist aus der Gruppe, umfassend:
- Zeitstempel der Erfassung der elektronischen Mediumkennung durch die Validatorvorrichtung (126, 302),
- eine Kennung der Validatorvorrichtung (126, 302),
- Ortsangabe der Validatorvorrichtung (126, 302),
- Kennung eines Transportfahrzeugs (122),
- Kennung einer Transportstation (122), und/oder
- die angefragten Fahrtangabe mindestens ein Fahrtdatum umfasst, ausgewählt aus der Gruppe, umfassend:
- Startort der angefragten Fahrt,
- Zielort der angefragten Fahrt,
- Kalenderdatum der angefragten Fahrt,
- Startzeitpunkt der angefragten Fahrt,
- Endzeitpunkt der angefragten Fahrt,
- eine einem angefragten Transportfahrzeug zugeordnete Kennung.

3. Hintergrundsystem (102, 303) nach Anspruch 1 oder 2, **dadurch gekennzeichnet, dass** das Hintergrundsystem (102, 303) ferner umfasst:
- mindestens ein Empfangsmodul (108), eingerichtet zum Empfangen einer Nutzungsanfrage von einem Nutzerendgerät (136), wobei die Nutzungsanfrage zumindest die angefragte Fahrtangabe umfasst,
und/oder zum Empfangen einer Nutzungsbestätigung von einem Nutzerendgerät (136), enthaltend den Bestätigungsdatensatz.

4. Hintergrundsystem (102, 303) nach einem der vorherigen Ansprüche, **dadurch gekennzeichnet, dass**
- die Mediumkennungsreferenz eine in dem Hintergrundsystem (102, 303) registrierte Mediumkennungsreferenz ist, wobei eine registrierte Mediumkennungsreferenz in einem Nutzerdatensatz in dem Hintergrundsystem (102, 303) gespeichert ist,
- wobei der Nutzerdatensatz insbesondere mindestens ein weiteres Nutzerdatum umfasst, ausgewählt aus der Gruppe, umfassend:
- Nutzername,
- Adressdaten des Nutzers,
- Nutzerpasswort,
- Abrechnungsdaten,
- Fahrttarifdaten
- Kontodaten
- Daten weiterer Zahlmedien
- Zugehörigkeit zu einer Nutzergruppe.

5. Hintergrundsystem (102, 303) nach einem der vorherigen Ansprüche, **dadurch gekennzeichnet, dass** das Hintergrundsystem (102, 303) ferner umfasst:
- mindestens ein Zuordnungsmodul (118), eingerichtet zum Zuordnen eines erhaltenen Enddatensatzes zu einem gespeicherten Fahrtdatensatz, basierend auf der jeweils enthaltenen Mediumkennungsreferenz, und
- mindestens ein Prüfungsmodul (120), eingerichtet zum Überprüfen, ob das mindestens eine Transportinformationsdatum des Enddatensatzes zu der gespeicherten Fahrtangabe des Fahrtdatensatzes korrespondiert.

6. Hintergrundsystem (102, 303) nach Anspruch 5, **dadurch gekennzeichnet, dass**
- das Abrechnungsmodul (110) eingerichtet ist zum Abrechnen der angefragten Fahrtangabe, basierend auf dem gespeicherten augenblicklichen Tarifdatum, nur dann wenn durch das Prüfungsmodul (120) festgestellt wird, dass das mindestens eine Transportinformationsdatum zu der gespeicherten Fahrtangabe korrespondiert.

7. Hintergrundsystem (102, 303) nach einem der vorherigen Ansprüche, **dadurch gekennzeichnet, dass**
- der Bestätigungsdatensatz den Startdatensatz ersetzt.

8. Hintergrundsystem (102, 303) nach einem der vorherigen Ansprüche, **dadurch gekennzeichnet, dass**
- das mindestens eine Tarifkriterium ein Zeitdifferenzkriterium ist, welches eine Abhängigkeit zwischen einer Zeitdifferenz und dem augenblicklichen Tarifdatum angibt,
- wobei die Zeitdifferenz insbesondere die Zeitdifferenz zwischen dem Empfangszeitpunkt einer Nutzungsanfrage und einem Startzeitpunkt der angefragten Fahrtangabe ist.

9. Hintergrundsystem (102, 303) nach einem der vorherigen Ansprüche, **dadurch gekennzeichnet, dass**
- das mindestens eine Tarifkriterium ein Transportauslastungskriterium ist,
- wobei das Transportauslastungskriterium eine Abhängigkeit zwischen einer Transportauslastung mindestens eines Transportfahrzeugs einer angefragten Fahrtangabe und dem augenblicklichen Tarifdatum angibt.

10. Hintergrundsystem (102, 303) nach einem der vorherigen Ansprüche, **dadurch gekennzeichnet, dass**
- das mindestens eine Tarifkriterium mindestens ein meteorologisches Kriterium ist.

11. Hintergrundsystem (102, 303) nach einem der vorherigen Ansprüche, **dadurch gekennzeichnet, dass**
- das mindestens eine Tarifkriterium mindestens ein Ereigniskriterium ist.

12. Hintergrundsystem (102, 303) nach einem der vorherigen Ansprüche, **dadurch gekennzeichnet, dass** das Hintergrundsystem (102, 303) ferner umfasst:
- mindestens ein Sperrprüfmodul (152), eingerichtet zum Prüfen, ob ein für die durchgeführte Fahrt zu entrichtender Betrag innerhalb einer bestimmten Zeitdauer entrichtet wurde, und
- mindestens ein Sperrmodul (154), eingerichtet zum Aussenden einer Sperrnachricht an die mindestens eine Validatorvorrichtung (126, 302), derart, dass die Verwendung des Ticketmediums (124) an der mindestens einen Validatorvorrichtung (126, 302) gesperrt wird.

13. Open-Loop Transportsystem (100), umfassend:
- mindestens eine Hintergrundsystem (102, 303) nach einem der vorherigen Ansprüche, und
- mindestens eine Validatorvorrichtung (126, 302), eingerichtet zum Erfassen eines elektronischen Startdatensatzes und/oder Enddatensatzes eines Ticketmediums (124), welches für eine Fahrt verwendet wird.

14. Transportsystem (100) nach Anspruch 13, **dadurch gekennzeichnet, dass** das Transportsystem (100) ferner umfasst:
- mindestens eine auf einem Nutzerendgerät (136) installierbare Dienstleistungsanwendung (142, 301),
- wobei die Dienstleistungsanwendung (142, 301) mindestens ein Anfragemodul (144) aufweist, eingerichtet zum Bewirken eines Aussendens einer Nutzungsanfrage, enthaltend zumindest eine angefragte Fahrtangabe, und/oder
- wobei die Dienstleistungsanwendung (142, 301) mindestens ein Empfangsmodul (146) aufweist, eingerichtet zum Empfangen eines für die angefragte Fahrtangabe bestimmten augenblicklichen Tarifdatums,
und/oder
- wobei die Dienstleistungsanwendung (142, 301) mindestens Bestätigungsmodul (148) aufweist, eingerichtet zum Bewirken eines Aussendens einer Nutzungsbestätigung, enthaltend zumindest einen Bestätigungsdatensatz.

15. Verfahren zum Betreiben eines Open-Loop Transportsystems (100), umfassend mindestens ein Hintergrundsystem (102, 303), insbesondere ein Hintergrundsystem (102, 303) nach einem der vorherigen Ansprüche, **dadurch gekennzeichnet, dass** das Verfahren umfasst:
- Bestimmen, durch ein dynamisches Tarifbestimmungsmodul (112) des Hintergrundsystems (102, 303), eines augenblicklichen Tarifdatums, basierend auf einer angefragten Fahrtangabe und auf mindestens einem Tarifkriterium,
- Ausgeben, durch mindestens ein Ausgabemodul (106) des Hintergrundsystems (102, 303), des für die angefragte Fahrtangabe bestimmten augenblicklichen Tarifdatums, und
- bei Erhalt eines Bestätigungsdatensatzes als Antwort auf das für die angefragte Fahrtangabe ausgegebene augenblickliche Tarifdatum: Speichern, durch mindestens ein Speichermodul (114) des Hintergrundsystems (102, 303), eines Fahrtdatensatzes, enthaltend das ausgegebene augenblickliche Tarifdatum, die angefragte Fahrtangabe und eine Mediumkennungsreferenz,
- bei einer Detektion einer Inanspruchnahme der für die Mediumkennungsreferenz gespeicherten Fahrtangabe: Abrechnen, durch ein Abrechnungsmodul (110) des Hintergrundsystems (102, 303), der angefragten Fahrtangabe, basierend auf dem gespeicherten Fahrtdatensatz.
